(19) **Europäisches Patentamt / European Patent Office / Office européen des brevets**

(11) **EP 4 757 430 A1**

(12) **EUROPEAN PATENT APPLICATION**
published in accordance with Art. 153(4) EPC

(43) Date of publication:
**10.06.2026 Bulletin 2026/24**

(21) Application number: **24851355.8**

(22) Date of filing: **21.05.2024**

(51) International Patent Classification (IPC):
**H04W 52/02** (2009.01)   **H04W 4/38** (2018.01)
**H04W 56/00** (2009.01)

(52) Cooperative Patent Classification (CPC):
**H04W 4/38; H04W 52/02; H04W 56/00**

(86) International application number:
**PCT/JP2024/018662**

(87) International publication number:
**WO 2025/032921 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 JP 2023127477**

(71) Applicant: **SMC Corporation**
**Tokyo 104-0031 (JP)**

(72) Inventors:
• **GANDO Takashi**
**Tsukubamirai-shi, Ibaraki 300-2493 (JP)**
• **KUWAHARA Toshiaki**
**Tsukubamirai-shi, Ibaraki 300-2493 (JP)**

(74) Representative: **Keil & Schaafhausen Patentanwälte PartGmbB**
**Bockenheimer Landstraße 25**
**60325 Frankfurt am Main (DE)**

(54) **REMOTE WIRELESS DEVICE**

(57)   A remote wireless device (20) that performs wireless communication with a base wireless device (10) comprises: a generation unit (128) that generates data (DT) to be transmitted to the base wireless device on the basis of input information (SI) from an external device (50); and a communication unit (120) that transmits the data generated by the generation unit to the base wireless device. When having transmitted the data to the base wireless device, the communication unit does not transmit the data again until a standby period (Tw) elapses since the transmission of the data.

FIG. 1

**Description**

TECHNICAL FIELD

The present invention relates to a remote wireless device.

BACKGROUND ART

A wireless sensor terminal disclosed in JP 2021-190855 A carries out data processing on a physical quantity that is measured by a sensor, and transmits processed data to an application server. A time period until the data transmission occurs is calculated taking into consideration a sensing cycle. During the time period until the data transmission occurs, a control device in the wireless sensor terminal is in a sleep state.

SUMMARY OF THE INVENTION

In the wireless sensor terminal disclosed in JP 2021-190855 A, when the sensing cycle becomes shorter, the data transmission occurs with great frequency. A comparatively large amount of electrical power is consumed by the data transmission. In the case that the output of an electrical power source that supplies the electrical power to the wireless sensor terminal is low, due to the data transmission occurring with great frequency, system outage of the wireless sensor terminal may occur without an internal voltage of the wireless sensor terminal being restored.

The present invention has the object of solving the aforementioned problem.

An aspect of the present invention is characterized by a remote wireless device configured to carry out wireless communication with a base wireless device, the remote wireless device including a generation unit configured to generate data to be transmitted to the base wireless device based on input information from an external device, and a communication unit configured to transmit the data generated by the generation unit to the base wireless device, wherein, in a case that the communication unit transmits the data to the base wireless device, the data will not be transmitted again until a waiting period has elapsed from transmission of the data.

According to the present invention, it can be expected that the internal voltage of the remote wireless device will be restored.

The above and other objects, features, and advantages of the present invention will become more apparent from the following description when taken in conjunction with the accompanying drawings, in which a preferred embodiment of the present invention is shown by way of illustrative example.

BRIEF DESCRIPTION OF DRAWINGS

[FIG. 1] FIG. 1 is a diagram showing an example of the configuration of a wireless communication system including a base wireless device and a plurality of remote wireless devices;

[FIG. 2] FIG. 2 is a diagram illustrating a sequence of wireless communication carried out between the base wireless device and the remote wireless devices;

[FIG. 3] FIG. 3A and FIG. 3B are diagrams illustrating a change in an internal voltage within the remote wireless device, due to data being transmitted;

[FIG. 4] FIG. 4A and FIG. 4B are diagrams illustrating a change in an internal voltage within the remote wireless device, due to data being transmitted;

[FIG. 5] FIG. 5 is a diagram illustrating the change in the internal voltage within the remote wireless device, in the case that retrying of the data transmission is repeated;

[FIG. 6] FIG. 6A is a diagram illustrating a change in the internal voltage within the remote wireless device, in the case that a waiting period is not provided, and FIG. 6B is a diagram illustrating a change in the internal voltage within the remote wireless device, in the case that the waiting period is provided;

[FIG. 7] FIG. 7 is a flowchart showing a data transmission processing procedure in the remote wireless device;

[FIG. 8] FIG. 8 is a flowchart showing the data transmission processing procedure in the remote wireless device;

[FIG. 9] FIG. 9 is a block diagram showing an exemplary configuration of the remote wireless device;

[FIG. 10] FIG. 10A and FIG. 10B are diagrams illustrating a change in the internal voltage within the remote wireless device, in the case that the waiting period is provided;

[FIG. 11] FIG. 11A is a diagram illustrating an example of a parameter that is used to change a waiting period, and FIG. 11B and FIG. 11C are diagrams illustrating tables that are used for changing the waiting period;

[FIG. 12] FIG. 12 is a block diagram showing an exemplary configuration of the remote wireless device;

[FIG. 13] FIG. 13A is a diagram illustrating a data transmission process, in the case that an operation mode of a generation unit of the remote wireless device is a first generation mode, and

FIG. 13B is a diagram illustrating the data transmission process, in the case that the operation mode of the generation unit of the remote wireless device is a second generation mode; and

[FIG. 14] FIG. 14 is a flowchart showing a data generation processing procedure in the remote wireless device.

DETAILED DESCRIPTION OF THE INVENTION

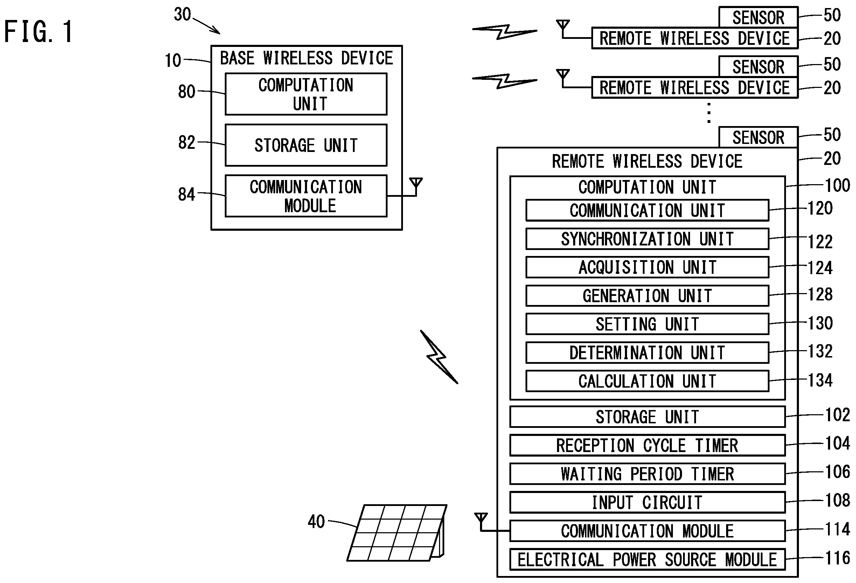

FIG. 1 is a diagram showing an example of the configuration of a wireless communication system 30 including a base wireless device 10 and a plurality of remote wireless devices 20. The wireless communication system 30 is used for wireless communication within an industrial facility, for example, as disclosed in JP 2017-188868 A. The base wireless device 10 is supplied with electrical power by a commercial electrical power source.

All of the plurality of remote wireless devices 20 are supplied with electrical power by a low output electrical power source 40. The low output electrical power source 40, for example, is an energy harvester, a wireless electrical power supplying facility, a small capacity battery, or the like. An energy harvester is a small scale electrical power generator that generates electrical power, for example, using light, sound, pressure, vibrations, or the like. There are cases in which the generated electrical power output of such electrical power generators may decrease depending on environmental conditions and the like.

In FIG. 1, an example is shown in which, as the low output electrical power source 40, there is used a small scale electrical power generator that generates electrical power using sunlight. In the case of an electrical power generator that uses sunlight, the generated electrical power output decreases as the amount of sunlight decreases. The voltage that is supplied internally to each of the plurality of remote wireless devices 20 is a low voltage on the order of several volts, and the voltage may change depending on the generated electrical power output of the low output electrical power source 40. In the present embodiment, the generated electrical power output of the low output electrical power source 40 is reduced due to a decrease in the hours of sunlight.

Wireless communication is carried out between the base wireless device 10 and each of the remote wireless devices 20. The base wireless device 10 is controlled by a non-illustrated control device that is connected by means of wires or wirelessly. The control device may be, for example, a PLC (Programmable Logic Controller) that monitors and controls an industrial facility.

A sensor signal is input from a sensor 50, which is an external device, to one of the remote wireless devices 20. The sensor signal from the sensor 50 that is input to the remote wireless device 20, hereinafter, is also referred to as input information SI from the sensor 50. The remote wireless device 20, based on the input information SI, transmits data DT to the base wireless device 10 by way of wireless communication. The base wireless device 10 transfers the data DT that is received from each of the remote wireless devices 20 to the above-mentioned control device. The control device uses the transferred data DT and thereby carries out data processing.

The base wireless device 10 includes a computation unit 80, a storage unit 82, and a communication module 84. The computation unit 80 includes a processor such as a CPU (Central Processing Unit) or a GPU (Graphics Processing Unit) or the like. More specifically, the computation unit 80 includes a processing circuitry.

The computation unit 80 may be realized by an integrated circuit such as an ASIC (Application Specific Integrated Circuit) or an FPGA (Field Programmable Gate Array) or the like, or alternatively, an electronic circuit including a discrete device.

The storage unit 82 includes a volatile memory such as a RAM (Random Access Memory) or the like, and a nonvolatile memory such as a ROM (Read Only Memory) or a flash memory or the like. The volatile memory is used as a working memory for the processor. The nonvolatile memory stores a program and the like to be executed by the processor.

The computation unit 80, by executing the aforementioned program that is stored in the storage unit 82, establishes the synchronization and maintains the synchronization of the wireless communication between itself and the remote wireless devices 20. Specifically, the computation unit 80 broadcasts via the communication module 84 a synchronization establishment signal SE in order to establish the synchronization of the wireless communication. After having established the synchronization of the wireless communication with the remote wireless devices 20, in order to maintain the synchronization thereof, the computation unit 80 broadcasts a synchronization maintenance signal SM via the communication module 84.

Further, by executing the aforementioned program that is stored in the storage unit 82, the computation unit 80, in a state in which the synchronization of the wireless communication is established or maintained, receives via the communication module 84 the aforementioned data DT between itself and the remote wireless devices 20. Moreover, in the wireless communication after having established the synchronization, the frequency is switched in a cyclical manner. Stated otherwise, in the wireless communication after having established the synchronization, a frequency hopping method is adopted. The communication module 84 is used in the aforementioned wireless communication.

Each of the remote wireless devices 20 comprises a computation unit 100, a storage unit 102, a reception cycle timer 104, a waiting period timer 106, an input circuit 108, a communication module 114, and an electrical power source module 116. The computation unit 100 includes a processor such as a CPU, a GPU, or the like. More specifically, the computation unit 100 includes a processing circuitry. The storage unit 102 includes a volatile memory such as a RAM or the like, and a nonvolatile memory such as a ROM or a flash memory or the like. The volatile memory is used as a working memory for the processor. The nonvolatile memory stores a program and the like to be executed by the processor.

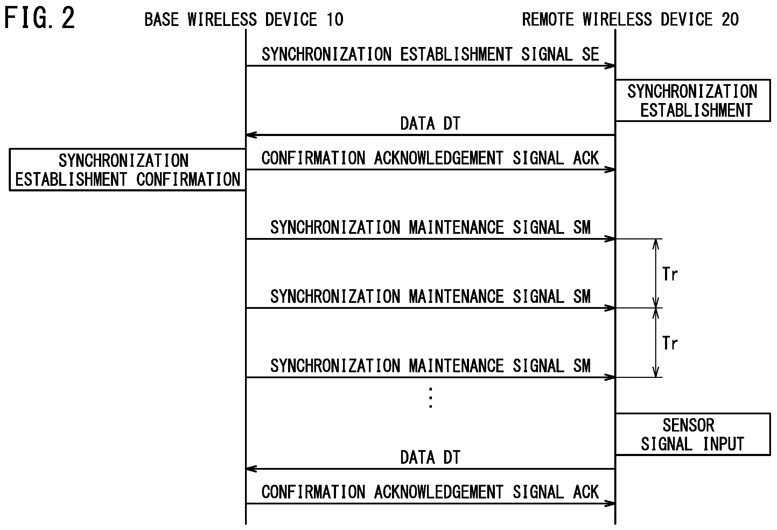

The reception cycle timer 104, as will be described later with reference to FIG. 2, counts a reception cycle Tr of the synchronization maintenance signal SM. The reception cycle timer 104 repeatedly expires and starts at a reception cycle Tr interval. When the reception cycle timer 104 expires, the reception cycle Tr ends and the reception cycle timer 104 starts again. When the reception cycle timer 104 starts, a next reception cycle Tr begins.

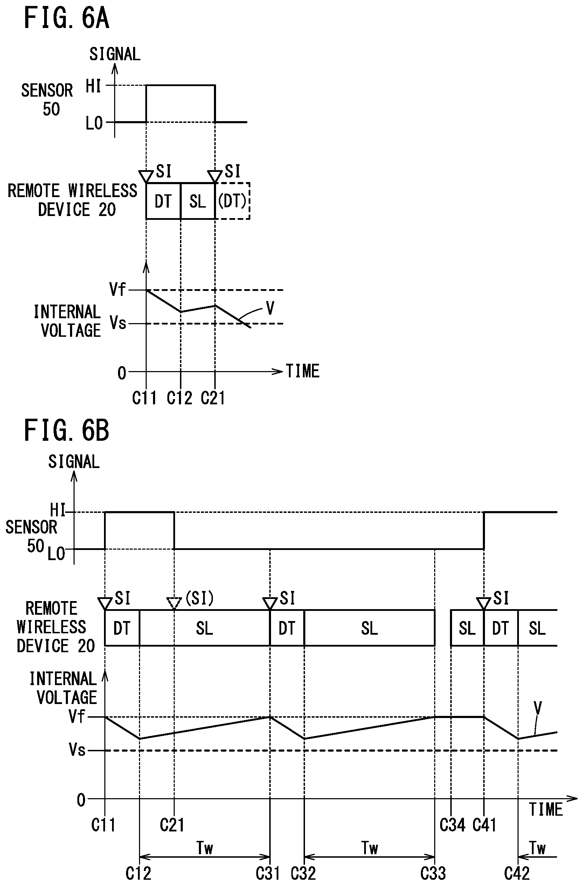

The waiting period timer 106, as will be described later with reference to FIG. 6B, measures a waiting period Tw during which the transmission of new data DT is not carried out. When the transmission of the data DT is successful, the waiting period timer 106 starts, and the waiting period Tw begins. When the waiting period timer 106 expires, the waiting period Tw comes to an end, and the new data DT can be transmitted.

The input circuit 108 receives the input information SI from the sensor 50. As will be described later, based on the input information SI that is input to the input circuit 108, the generation and the transmission of the data DT is carried out by the computation unit 100. The communication module 114 is used in the aforementioned wireless communication. The electrical power source module 116 converts the electrical power from the low output electrical power source 40, and provides the electrical power within the remote wireless device 20.

The computation unit 100 comprises a communication unit 120, a synchronization unit 122, an acquisition unit 124, a generation unit 128, a setting unit 130, a determination unit 132, and a calculation unit 134. The communication unit 120, the synchronization unit 122, the acquisition unit 124, the generation unit 128, the setting unit 130, the determination unit 132, and the calculation unit 134 are realized by the computation unit 100 executing a program that is stored in the storage unit 102.

The communication unit 120 receives via the communication module 114 the synchronization establishment signal SE in order to establish the synchronization of the wireless communication. The communication unit 120 receives via the communication module 114 the synchronization maintenance signal SM in order to maintain the synchronization of the wireless communication. The communication unit 120 transmits to the base wireless device 10 via the communication module 114 the data DT that is generated by the later-described generation unit 128. The communication unit 120 receives via the communication module 114 a confirmation acknowledgement signal ACK that is transmitted from the base wireless device 10 with respect to the data DT that was transmitted.

In the case that the synchronization establishment signal SE has been received by the communication unit 120, the synchronization unit 122 synchronizes the generation timing of a clock signal of the remote wireless device 20 with the generation timing of a clock signal of the base wireless device 10. In the case that the synchronization maintenance signal SM has been received by the communication unit 120, the synchronization unit 122 corrects the generation timing of the clock signal of the remote wireless device 20, and thereby maintains the synchronization of the wireless communication with the base wireless device 10.

In accordance therewith, after the synchronization is established, in principle, by way of frequency hopping, the switching timing of the frequencies can be made to coincide in the base wireless device 10 and the remote wireless device 20. In order to maintain this coincidence, the synchronization maintenance signal SM is transmitted in a cyclical manner.

As noted previously, by the electrical power source module 116, the electrical power is provided within the remote wireless device 20. The acquisition unit 124 acquires an internal voltage V within the remote wireless device 20.

The generation unit 128, based on the input information SI from the sensor 50, generates the data DT to be transmitted to the base wireless device 10. The setting unit 130 sets the operation mode of the generation unit 128 in advance.

The determination unit 132 determines whether or not the internal voltage V within the remote wireless device 20 which is acquired by the acquisition unit 124 is greater than a later-described voltage threshold value Vth. In the case that the internal voltage V is greater than the voltage threshold value Vth, the communication unit 120 is capable of transmitting the data DT to the base wireless device 10. In the case that the internal voltage V is less than or equal to the voltage threshold value Vth, the communication unit 120 holds the data DT without transmitting the data DT to the base wireless device 10.

The calculation unit 134, in the case that the transmission of the data DT by the communication unit 120 to the base wireless device 10 has failed, calculates an upper limit value Nm of the number of retries N that the transmission of the data DT is capable of being retried. In the case that the transmission of the data DT has failed, until the transmission of the data DT is successful, the communication unit 120 repeatedly retries the transmission of the data DT within a range in which the number of retries N is less than or equal to the upper limit value Nm.

FIG. 2 is a diagram illustrating a sequence of the wireless communication carried out between the base wireless device 10 and one of the remote wireless devices 20. The computation unit 80 of the base wireless device 10 and the computation unit 100 of the remote wireless device 20, by way of wireless communication, are capable of carrying out the transmission and reception of signals to and from each other at a predetermined cyclical interval. The predetermined cycle is a value within the range of roughly 1 to 5 [ms], and for example, is 5 [ms].

At the beginning of the sequence shown in FIG. 2, the synchronization of the wireless communication is established. Therefore, the computation unit 80 of the base wireless device 10, via the communication module 84, transmits the synchronization establishment signal SE in a cyclical manner by way of broadcasting using a predetermined frequency. The transmission cycle of the synchronization establishment signal SE is a value within the range of roughly 1 to 1000 [ms], and for example, is 250 [ms]. The synchronization establishment signal SE includes information of the clock of the base wireless device 10.

The communication unit 120 of the remote wireless device 20 waits for and receives via the communication module 114 the synchronization establishment signal SE from the base wireless device 10 at the aforementioned predetermined frequency. The synchronization unit 122 of the remote wireless device 20, based on the information contained in the synchronization establishment signal SE, synchronizes the clock of the remote wireless device 20 with the clock of the base wireless device 10. In accordance therewith, in the remote wireless device 20, the synchronization of the wireless communication with the base wireless device 10 is established.

In the case that there is a sensor signal from the sensor 50, then based on the sensor signal, the generation unit 128 of the remote wireless device 20 generates the data DT to be transmitted to the base wireless device 10. Moreover, it should be noted that dummy data DT that is not based on a sensor signal may also be generated. The communication unit 120 of the remote wireless device 20, via the communication module 114, transmits the data DT to the base wireless device 10.

The computation unit 80 of the base wireless device 10, via the communication module 84, receives the data DT from the remote wireless device 20. In accordance therewith, in the base wireless device 10, the synchronization of the wireless communication with the remote wireless device 20 is established. The computation unit 80 of the base wireless device 10, via the communication module 84, transmits the confirmation acknowledgement signal ACK to the remote wireless device 20. The communication unit 120 of the remote wireless device 20, via the communication module 114, receives the confirmation acknowledgement signal ACK from the base wireless device 10.

After having established the synchronization of the wireless communication, in a manner so as to maintain the synchronization thereof, the computation unit 80 of the base wireless device 10, via the communication module 84, broadcasts in a cyclical manner the synchronization maintenance signal SM. The transmission cycle of the synchronization maintenance signal SM is a value within the range of roughly 1 to 1000 [ms], and for example, is 100 [ms]. The synchronization maintenance signal SM includes information of the clock of the base wireless device 10.

The communication unit 120 of the remote wireless device 20, via the communication module 114, receives in a cyclical manner the synchronization maintenance signal SM from the base wireless device 10. The reception cycle Tr of the synchronization maintenance signal SM in the remote wireless device 20 is a value that is a positive integer multiple of the transmission cycle of the synchronization maintenance signal SM in the base wireless device 10.

Measurement of the reception cycle Tr of the synchronization maintenance signal SM is carried out by the above-described reception cycle timer 104. The communication unit 120 of the remote wireless device 20 waits for and receives the synchronization maintenance signal SM from the base wireless device 10 at every instance of the reception cycle Tr. The synchronization unit 122 of the remote wireless device 20, based on the information contained in the synchronization maintenance signal SM, corrects the clock of the remote wireless device 20, and thereby maintains the synchronization of the wireless communication with the base wireless device 10.

In a state in which the synchronization of the wireless communication is maintained, it is assumed that the sensor signal is input from the sensor 50 to the remote wireless device 20. In that case, the generation unit 128 of the remote wireless device 20, based on the sensor signal, generates the data DT to be transmitted to the base wireless device 10. The communication unit 120 of the remote wireless device 20 transmits the data DT to the base wireless device 10.

The computation unit 80 of the base wireless device 10 receives the data DT from the remote wireless device 20. The computation unit 80 of the base wireless device 10 transmits the confirmation acknowledgement signal ACK to the remote wireless device 20. The communication unit 120 of the remote wireless device 20 receives the confirmation acknowledgement signal ACK from the base wireless device 10. The reception of the confirmation acknowledgement signal ACK implies that the data DT has been successfully transmitted from the remote wireless device 20 to the base wireless device 10.

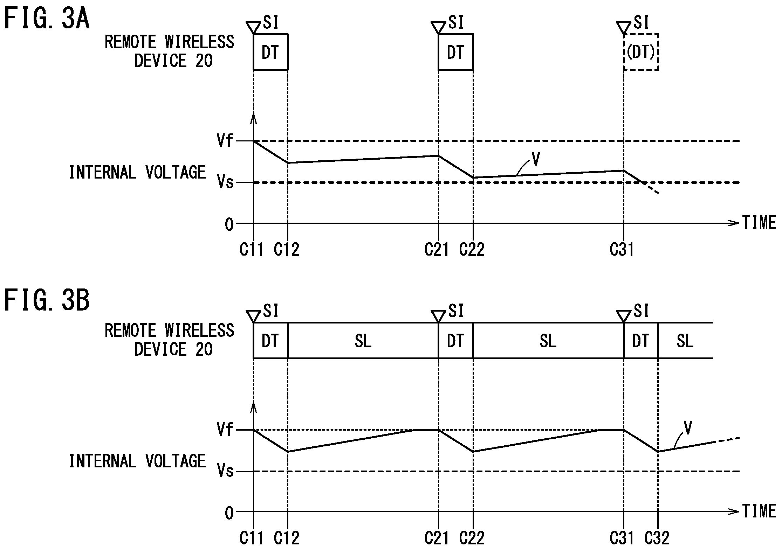

FIG. 3A and FIG. 3B are diagrams illustrating a change in an internal voltage V within the remote wireless device 20, due to the data DT being transmitted. In FIG. 3A and FIG. 3B, the times for which the same reference numerals (for example, C11) are used represent the same timing. In the conventional example shown in FIG. 3A, at time C11, the input information SI is input from the sensor 50 to the input circuit 108 of the remote wireless device 20. The generation unit 128, on the basis of such input information SI, generates the data DT to be transmitted to the base wireless device 10. The communication unit 120 transmits the data DT to the base wireless device 10.

As noted previously, a voltage value Vf of the internal voltage V is on the order of several volts. The transmission of the data DT consumes a large amount of electrical power. In an environment in which the electrical power is supplied from the low output electrical power source 40, the internal voltage V at time C12 after the transmission of the data DT decreases to a voltage value that is lower than the voltage value Vf of the internal voltage V at time C11. After time C12, in a period in which the generation and the transmission of the data DT is not carried out, there is a possibility that the internal voltage V may rise slightly.

In the example shown in FIG. 3A, at time C21 after time C12, the internal voltage V has not yet been restored to the voltage value Vf. At time C21, when the input information SI is input again from the sensor 50 to the input circuit 108, the generation and the transmission of the data DT is carried out. In accordance therewith, the internal voltage V of the remote wireless device 20 decreases further. After time C22, in a period in which the generation and the transmission of the data DT is not carried out, the internal voltage V may rise slightly.

In the example shown in FIG. 3A, at time C31 after time C22, the internal voltage V has not yet been restored to the voltage value Vf. At time C31, the input information SI from the sensor 50 is again input to the input circuit 108. Along therewith, when the generation and the transmission of the data DT is initiated, the internal voltage V further decreases. In this manner, the internal voltage V gradually decreases, and therefore, reaches a voltage value Vs at which system outage of the remote wireless device 20 may occur. In the example shown in FIG. 3A, the generation and the transmission of the data DT based on the input information SI at time C31 is not completed.

In a state in which the synchronization of the wireless communication is maintained, the signals that the remote wireless device 20 receives from the base wireless device 10, as shown in FIG. 2, are only the synchronization maintenance signal SM and the confirmation acknowledgement signal ACK. The remote wireless device 20 receives the synchronization maintenance signal SM in the aforementioned reception cycle Tr. After having transmitted the data DT, the remote wireless device 20 receives the confirmation acknowledgement signal ACK from the base wireless device 10.

More specifically, it is possible to specify in advance the period during which the remote wireless device 20 receives the signal from the base wireless device 10. In periods other than such a specified period, since signals are not transmitted from the base wireless device 10, the operation of the computation unit 100 of the remote wireless device 20 can be suspended. In the present embodiment, as shown in FIG. 3B, after the transmission of the data DT has been completed, the operation mode of the computation unit 100 of the remote wireless device 20 changes from a normal mode to a first sleep mode.

A description will be given concerning the normal mode and the first sleep mode. In the normal mode, the communication unit 120, the synchronization unit 122, the acquisition unit 124, the generation unit 128, the setting unit 130, the determination unit 132, and the calculation unit 134 of the computation unit 100 can each carry out the aforementioned processes that were described using FIG. 1.

By the electrical power source of the computation unit 100 being turned OFF, a sleep process in the first sleep mode is executed. When the sleep process is executed and the operation mode of the computation unit 100 becomes the first sleep mode, the computation unit 100 stops operating. More specifically, the communication unit 120, the synchronization unit 122, the acquisition unit 124, the generation unit 128, the setting unit 130, the determination unit 132, and the calculation unit 134 enter into a state in which each of them respectively do not carry out the aforementioned processes. A cancellation trigger for the sleep state in the first sleep mode is the input of the input information SI, or alternatively, is the expiration of the reception cycle timer 104.

In the example shown in FIG. 3B, similar to the example shown in FIG. 3A, at time C11, the input information SI is input from the sensor 50 to the input circuit 108 of the remote wireless device 20. By the generation and the transmission of the data DT based on such input information SI, the internal voltage V within the remote wireless device 20 decreases from the voltage value Vf. However, by the sleep process being executed at time C12, the internal voltage V that has been decreasing rises.

At time C21, when the input information SI is input again from the sensor 50 to the input circuit 108, the sleep state is cancelled, and the generation and the transmission of the data DT is carried out. Accordingly, the period from time C12 to time C21 becomes a sleep period SL. Until this time C21, the internal voltage V is restored to the voltage value Vf. More specifically, during the sleep period SL from time C12 until time C21, the internal voltage V is restored to the voltage value Vf.

Moreover, in the sleep period SL of the first sleep mode, based on the input information SI being input to the input circuit 108, a wake-up signal is input from the input circuit 108 to the electrical power source of the computation unit 100. In accordance therewith, the electrical power source of the computation unit 100 is turned ON. By the electrical power source of the computation unit 100 being turned ON, the sleep state is cancelled. When the sleep state is cancelled and the operation mode of the computation unit 100 returns to the normal mode, the communication unit 120, the synchronization unit 122, the acquisition unit 124, the generation unit 128, the setting unit 130, the determination unit 132, and the calculation unit 134 each return to a state in which they are capable of carrying out the aforementioned processes.

By the generation and the transmission of the data DT at time C21, the internal voltage V decreases again from the voltage value Vf. Due to the sleep process being executed at time C22, the internal voltage V, which has been decreasing, rises, and by time C31, is restored to the voltage value Vf. More specifically, during the sleep period SL from time C22 until time C31, the internal voltage V is restored to the voltage value Vf. In the example shown in FIG. 3B, differently from the example shown in FIG. 3A, the generation and the transmission of the data DT based on the input information SI from the sensor 50 at time C31 is completed at time C32.

As noted previously, by the sleep process being executed after the generation and the transmission of the data DT, it can be expected that the internal voltage V of the remote wireless device 20 will be restored. More specifically, any risk of the internal voltage V reaching the aforementioned voltage value Vs can be suppressed.

As shown in FIG. 3B, it is preferable that the internal voltage V be restored to the voltage value Vf while the operation mode of the computation unit 100 is in the sleep mode. However, in the case that the input information SI from the sensor 50 occurs with great frequency, the internal voltage V may not necessarily be restored to the voltage value Vf in the first sleep mode.

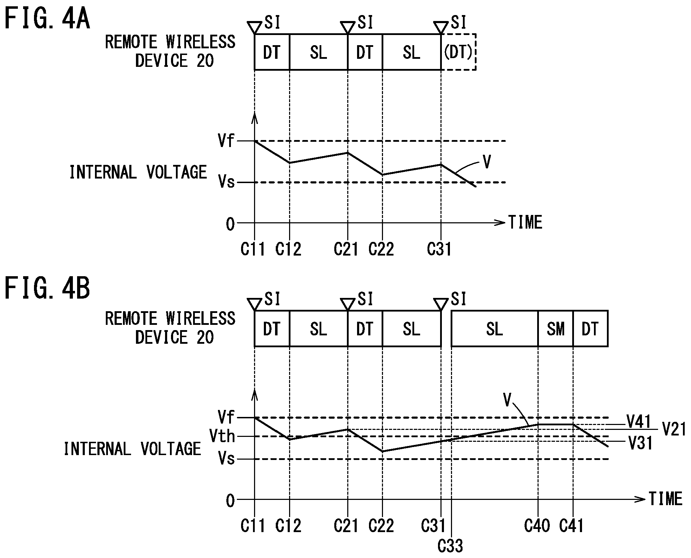

FIG. 4A and FIG. 4B are diagrams illustrating a change in an internal voltage V within the remote wireless device 20, due to the data DT being transmitted. In FIG. 4A and FIG. 4B, the times for which the same reference numerals (for example, C11) are used represent the same timing. However, in FIG. 4A and FIG. 4B, and in FIG. 3A and FIG. 3B, the times at which the same reference numerals are used need not necessarily represent the same timing.

In the example shown in FIG. 4A, similar to the example shown in FIG. 3B, due to the generation and the transmission of the data DT, the internal voltage V decreases from the voltage value Vf at time C11. By the sleep process being executed at time C12 after time C11, the internal voltage V rises. In the case that the input of the input information SI from the sensor 50 to the input circuit 108 occurs with great frequency, then the sleep period SL from time C12 until time C21 when the next input information Si is input is short. Therefore, the internal voltage V is not restored to the voltage value Vf by time C21, and remains at a voltage value that is lower than the voltage value Vf.

At time C21, when the input information SI is input again from the sensor 50 to the input circuit 108, the sleep state is cancelled, and the generation and the transmission of the data DT is carried out based on this input information SI. In accordance therewith, the internal voltage V further decreases. At time C22 after time C21, the generation and the transmission of the data DT is completed, and the sleep process is executed. In accordance therewith, the internal voltage V rises again.

From time C22, the sleep period SL until time C31 when the input information SI is again input from the sensor 50 to the remote wireless device 20 is short. Therefore, the internal voltage V is not restored to the voltage value Vf by time C31, and remains at a voltage value that is even lower than the voltage value at time C21. At time C31, the sleep state is cancelled, and by the generation and the transmission of the data DT being started, the internal voltage V decreases, and reaches the voltage value Vs at which the system outage of the remote wireless device 20 may occur. In the example shown in FIG. 4A, the generation and the transmission of the data DT based on the input information SI from the sensor 50 at time C31 is not completed.

Thus, in the present embodiment, in the case that the internal voltage V within the remote wireless device 20 is less than or equal to the predetermined voltage threshold value Vth, the communication unit 120 holds the data DT without transmitting the data DT to the base wireless device 10. A specific example of such a process will be described with reference to FIG. 4B. In the example shown in FIG. 4B, similar to the example shown in FIG. 4A, at time C11, the input information SI is input from the sensor 50 to the input circuit 108. By the generation and the transmission of the data DT based on such input information SI, the internal voltage V decreases from the voltage value Vf.

Due to the sleep process being executed at time C12, the internal voltage V rises during the sleep period SL from time C12. When the next input information SI is input to the input circuit 108 at time C21, the sleep state is cancelled, and the sleep period SL that was started at time C12 comes to an end at time C21. The generation unit 128 generates the data DT based on the input information SI at time C21. The acquisition unit 124 acquires a voltage value V21 of the internal voltage V. The voltage value V21 is less than the aforementioned voltage value Vf, but is greater than the voltage threshold value Vth. The voltage threshold value Vth is determined in advance, and is stored in the storage unit 102.

In the case that the internal voltage V is greater than the voltage threshold value Vth, the communication unit 120 transmits the data DT that is generated by the generation unit 128 to the base wireless device 10. By the generation and the transmission of the data DT, the internal voltage V decreases from the voltage value V21. At time C22, the generation and the transmission of the data DT is completed, and the sleep process is executed. In accordance therewith, from time C22, the internal voltage V rises again during the sleep period SL.

At time C31, the input information SI is input again to the input circuit 108, the sleep state is cancelled, and the sleep period SL that was started at time C22 comes to an end at time C31. The generation unit 128 generates the data DT based on the input information SI at time C31. The acquisition unit 124 acquires a voltage value V31 of the internal voltage V. In the example shown in FIG. 4B, the voltage value V31 is less than the voltage threshold value Vth.

In the case that the internal voltage V is less than or equal to the voltage threshold value Vth, the communication unit 120 holds and does not transmit the data DT that is generated by the generation unit 128 to the base wireless device 10. The communication unit 120 stores the data DT that is held, for example, in the storage unit 102. At time C33, when the held data DT has been completely stored in the storage unit 102, the sleep process is executed again. During the sleep period SL from time C33, the internal voltage V rises further.

Thereafter, at time C40, the reception cycle timer 104 that is used to count the reception cycle Tr of the synchronization maintenance signal SM expires. Along therewith, the wake-up signal is input from the reception cycle timer 104 to the electrical power source of the computation unit 100, and the sleep state is cancelled. The sleep period SL, which was started at time C33, comes to an end at time C40. The communication unit 120, from time C40 to time C41, receives the synchronization maintenance signal SM in a reception capable period of the synchronization maintenance signal SM during which the communication unit 120 is capable of receiving the synchronization maintenance signal SM.

The electrical power that is consumed by receiving the synchronization maintenance signal SM is less than the electrical power consumed by transmitting the data DT. In FIG. 4B, in order to facilitate explanation, the change in the internal voltage V during the reception capable period during which the synchronization maintenance signal SM is capable of being received is not taken into consideration.

The acquisition unit 124, in the aforementioned reception capable period during which the synchronization maintenance signal SM is capable of being received, acquires a voltage value V41 of the internal voltage V. The determination unit 132 determines whether or not the voltage value V41 of the internal voltage V that was acquired by the acquisition unit 124 is greater than the voltage threshold value Vth. In the example shown in FIG. 4B, the voltage value V41 of the internal voltage V is greater than the voltage threshold value Vth. In that case, the communication unit 120 acquires the data DT that is held, from the storage unit 102, and transmits the data DT to the base wireless device 10.

Differently from the example shown in FIG. 4B, in the case that the voltage value V41 of the internal voltage V that was acquired by the acquisition unit 124 is less than or equal to the voltage threshold value Vth, the communication unit 120 again holds the data DT that was held. Since the data DT is not transmitted and the sleep process is executed again, the internal voltage V also rises again. In the reception capable period during which the synchronization maintenance signal SM is capable of being received, the aforementioned determination of the voltage is carried out by the determination unit 132, and depending on the determination result, the same processing as described previously is carried out. Therefore, the restoration of the internal voltage V of the remote wireless device 20 can be expected. As a result, the internal voltage V does not reach the above-described voltage value Vs.

As noted previously, in response to the transmission of the data DT, if the confirmation acknowledgement signal ACK from the base wireless device 10 is received by the remote wireless device 20, the transmission of the data DT is successful. However, cases in which there is an instability in the wireless communication can often take place.

In an unstable communication environment, the data DT that is transmitted from the remote wireless device 20 may not be received by the base wireless device 10, and the data DT may be lost. In that case, the remote wireless device 20 cannot receive the confirmation acknowledgement signal ACK from the base wireless device 10. Further, apart therefrom, in the case that the aforementioned frequency switching is carried out, since the frequency after having been switched is in use by another device, the remote wireless device 20 may not be capable of transmitting the data DT. In either of these cases, the transmission of the data DT can be tried again.

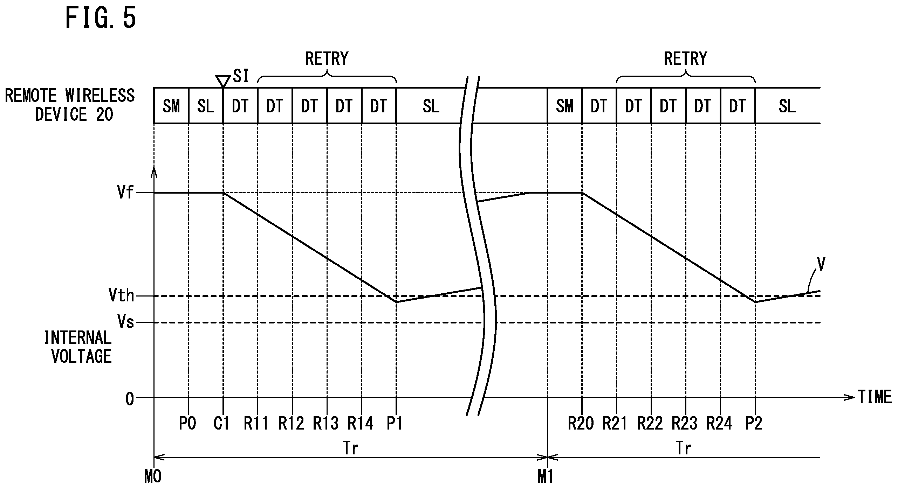

FIG. 5 is a diagram illustrating the change in the internal voltage V within the remote wireless device 20, in the case that retrying of the data transmission DT is repeated. In the example shown in FIG. 5, the communication unit 120 receives the synchronization maintenance signal SM at time M0, and at time M1 which is after the expiration of one aforementioned reception cycle Tr from time M0. The internal voltage V at time M0 and at time M1 is the voltage value Vf. As noted previously, the electrical power that is consumed by receiving the synchronization maintenance signal SM is less than the electrical power consumed by transmitting the data DT. In FIG. 5, in order to facilitate explanation, the change in the internal voltage V during the reception capable period during which each of the two respective synchronization maintenance signals SM is capable of being received is not taken into consideration.

After having received the first synchronization maintenance signal SM at time M0, at time P0, the sleep process in the first sleep mode is executed, and the sleep period SL is started. The internal voltage V is maintained at the voltage value Vf. At time C1 after the sleep process is executed, the input circuit 108 receives the input information SI from the sensor 50. By the wake-up signal being input from the input circuit 108 to the electrical power source of the computation unit 100, the sleep state in the first sleep mode is cancelled, and the sleep period SL from time P0 until time C1 comes to an end.

The generation unit 128, based on the input information SI from the sensor 50 at time C1, generates the data DT to be transmitted to the base wireless device 10. The acquisition unit 124 acquires the internal voltage V. The voltage value Vf of the internal voltage V at time C1 is greater than the voltage threshold value Vth. In the case that the internal voltage V is greater than the voltage threshold value Vth, the calculation unit 134 calculates the upper limit value Nm of the number of retries N. As noted previously, the number of retries N, in the case that the transmission of the data DT to the base wireless device 10 by the communication unit 120 has failed, is the number of times that the transmission of the data DT is capable of being retried.

The communication unit 120 transmits the aforementioned data DT that was generated. In the case that the transmission of the data DT has failed, until the transmission of the data DT is successful, the communication unit 120 repeatedly retries the transmission of the data DT to the base wireless device 10 within a range in which the number of retries N is less than or equal to the upper limit value Nm. The upper limit value Nm of the number of retries N is calculated based on the voltage value Vf of the internal voltage V at time C1, and the voltage threshold value Vth. For example, there is calculated as the aforementioned upper limit value Nm a quotient that is obtained by dividing the difference between the voltage value Vf and the voltage threshold value Vth by the amount of voltage drop due to the transmission of the data DT one time. In FIG. 5, an example is shown in which Nm = 4.

In the example shown in FIG. 5, the transmission of the data DT that is generated based on the input information SI from the sensor 50 at time C1 fails. In that case, the communication unit 120 retries the transmission of the data DT up to four times until the transmission of the data DT is successful. Specifically, as the first retry, the transmission of the data DT is retried at time R11. In the case that the transmission of the data DT has failed even in the first retry, as the second retry, the transmission of the data DT is retried at time R12.

In the case that the transmission of the data DT has failed even in the second retry, as the third retry, the transmission of the data DT is retried at time R13. In the case that the transmission of the data DT has failed even in the third retry, as the fourth retry, the transmission of the data DT is retried at time R14. In the case that the transmission of the data DT was not successful even when the number of retries N reaches the upper limit value Nm, the internal voltage V is considered to be less than or equal to the voltage threshold value Vth.

Accordingly, from time P1 and thereafter, after the transmission of the data DT for the Nm(= 4)th retry at time R14 has failed, the communication unit 120 holds the data DT without transmitting the data DT to the base wireless device 10. The communication unit 120 stores the data DT that is held, for example, in the storage unit 102. At time P1, the sleep process in the first sleep mode is executed, and the sleep period SL is started. During the sleep period SL, the internal voltage V rises.

After time P1 at which the data DT is held, as shown in FIG. 5, the first reception cycle Tr from time M0 comes to an end at time M1. The second reception cycle Tr is started at time M1. Accompanying the completion of the first reception cycle Tr, at time M1, the reception cycle timer 104 inputs a wake-up signal to the electrical power source of the computation unit 100. In accordance therewith, the sleep state in the first sleep mode is cancelled, and the sleep period SL from time P1 comes to an end at time M1. In the example shown in FIG. 5, at time M1, the internal voltage V is restored to the voltage value Vf as described above.

In the reception capable period from time M1 to time R20, during which the synchronization maintenance signal SM is capable of being received, the synchronization maintenance signal SM is received. At time R20 after the synchronization maintenance signal SM has been received, the acquisition unit 124 acquires the internal voltage V. The voltage value Vf of the internal voltage V that was acquired by the acquisition unit 124 is greater than the voltage threshold value Vth. In the case that the internal voltage V is greater than the voltage threshold value Vth, the calculation unit 134 newly calculates the upper limit value Nm of the number of retries N that the transmission of the data DT that is being held is capable of being retried.

The communication unit 120 acquires the data DT that is held, from the storage unit 102, and transmits the data DT to the base wireless device 10. Moreover, in the case that the internal voltage V is less than or equal to the voltage threshold value Vth, the communication unit 120 continues to hold the data DT that is being held.

In the case that the transmission of the data DT that is being held has failed, until the transmission of the data DT is successful, the communication unit 120 repeatedly retries the transmission of the data DT to the base wireless device 10 within a range in which the number of retries N is less than or equal to the upper limit value Nm. The upper limit value Nm of the number of retries N is calculated based on the voltage value Vf of the internal voltage V at time R20, and the voltage threshold value Vth. For example, there is calculated as the aforementioned upper limit value Nm a quotient that is obtained by dividing the difference between the voltage value Vf and the voltage threshold value Vth by the amount of voltage drop due to the transmission of the data DT one time. In FIG. 5, an example is shown in which Nm = 4.

In the example shown in FIG. 5, the transmission of the data DT that is being held fails. In that case, the communication unit 120 retries the transmission of the data DT up to four times until the transmission of the data DT is successful. Specifically, as the first retry, the transmission of the data DT is retried at time R21. In the case that the transmission of the data DT has failed even in the first retry, as the second retry, the transmission of the data DT is retried at time R22.

In the case that the transmission of the data DT has failed even in the second retry, as the third retry, the transmission of the data DT is retried at time R23. In the case that the transmission of the data DT has failed even in the third retry, as the fourth retry, the transmission of the data DT is retried at time R24. In the case that the transmission of the data DT was not successful even when the number of retries N reaches the upper limit value Nm, the internal voltage V is considered to be less than or equal to the voltage threshold value Vth.

Accordingly, from time P2 and thereafter, after the transmission of the data DT for the Nm(= 4)th retry at time R24 has failed, the communication unit 120 continues to hold the data DT without transmitting the data DT to the base wireless device 10. At time P2, the sleep process in the first sleep mode is executed, and the sleep period SL is started. During the sleep period SL, the internal voltage V rises. Eventually, the second reception cycle Tr comes to an end, and a non-illustrated third reception cycle Tr is started.

Until the transmission of the data DT is successful, in the third and subsequent receiving cycles Tr, retries similar to the above-described retry in the second receiving cycle Tr are carried out until the transmission of the data DT is successful. In this manner, even in an unstable communication environment, the possibility of the transmission of the data DT being successful is increased.

As noted previously, the control device carries out data processing, based on the information of the sensor signal that is acquired via the base wireless device 10. In the case that the sensor signal is generated with great frequency, depending on the manner in which the sensor signal is used, it is not always necessary to immediately transmit the data DT in response to the generation of the sensor signal. In that case, the transmission of the new data DT may not be carried out until the waiting period Tw has elapsed from the transmission of the data DT having been successful. After such a waiting period Tw has elapsed, the transmission of the new data DT is carried out.

In the case that the new data DT is not transmitted until the waiting period Tw has elapsed from the transmission of the data DT, a long sleep period SL after the transmission of the data DT can be ensured regardless of the frequency of occurrence of the sensor signal. Accordingly, the restoration of the internal voltage V of the remote wireless device 20 can be expected. A detailed description thereof will be given with reference to FIG. 6A and FIG. 6B.

FIG. 6A is a diagram illustrating a change in the internal voltage V within the remote wireless device 20, in the case that the waiting period Tw is not provided. In FIG. 6A and FIG. 6B, the times for which the same reference numerals (for example, C11) are used represent the same timing. However, in FIG. 6A and FIG. 6B, in FIG. 4A and FIG. 4B, and in FIG. 3A and FIG. 3B, even at times at which the same reference numerals are used, the reference numerals need not necessarily represent the same timing.

As shown in FIG. 6A, the internal voltage V at time C11 is at the voltage value Vf. At time C11, it is assumed that the sensor signal of the sensor 50 is changed from LO to HI. In response to such a change, based on the first input information SI input from the sensor 50 to the input circuit 108, the generation unit 128 generates the data DT to be transmitted to the base wireless device 10. The communication unit 120 transmits to the base wireless device 10 the data DT that is generated by the generation unit 128.

At time C12 after the data DT has been successfully transmitted, the internal voltage V decreases to a voltage value that is lower than the voltage value Vf. By the sleep process in the first sleep mode being executed at time C12, the internal voltage V, which has been decreasing, rises during the sleep period SL from time C12.

In the case that the input of the input information SI from the sensor 50 occurs with great frequency, the period from time C11 when the first input information SI is input to time C21 when the second input information SI is input is short. In the case that the sleep state is cancelled at time C21, the sleep period SL from time C12 to time C21 is also short. The internal voltage V that rises during the sleep period SL is not restored to the voltage value Vf by time C21, and remains at a voltage value that is lower than the voltage value Vf.

Assume that at time C21, the sensor signal of the sensor 50 has changed from HI to LO. In response to such a change, the second input information SI is input from the sensor 50 to the input circuit 108. The wake-up signal is input from the input circuit 108 to the electrical power source of the computation unit 100. Therefore, at time C21, the sleep state in the first sleep mode is cancelled.

In the example shown in FIG. 6A, the internal voltage V decreases after time C21 when the generation and the transmission of the data DT is carried out, and reaches the voltage value Vs at which the system outage of the remote wireless device 20 may occur. The generation and the transmission of the data DT based on the second input information SI at time C21 is not completed. The aforementioned control device is incapable of carrying out the data processing, based on the second input information SI from the sensor 50 at time C21.

FIG. 6B is a diagram illustrating a change in the internal voltage V within the remote wireless device 20, in the case that the waiting period Tw is provided. In the example shown in FIG. 6B, similar to the example shown in FIG. 6A, at time C11, the sensor signal of the sensor 50 changes from LO to HI. In response to such a change, based on the input information SI from the sensor 50 that is input to the input circuit 108, the data DT is generated by the generation unit 128. The data DT is transmitted by the communication unit 120 to the base wireless device 10.

By the generation and the transmission of the data DT, the internal voltage V decreases from the voltage value Vf at time C11. Moreover, after the data DT is transmitted, the input information SI corresponding to the data DT that is transmitted, until next input information SI is input to the input circuit 108, is stored in the storage unit 102 as previous input information SI.

At time C12, the transmission of the data DT is successful, and a sleep process in a second sleep mode is executed. A description will now be given concerning the second sleep mode. In the case that the sleep process in the second sleep mode is executed, in the same manner as in the first sleep mode, the operation of the computation unit 100 is suspended. In the first sleep mode and the second sleep mode, the cancellation triggers for the sleep state are different. The cancellation trigger of the sleep state in the second mode is the expiration of the reception cycle timer 104, or alternatively, is the expiration of the waiting period timer 106.

At time C12, at a timing at which the sleep process in the second sleep mode is executed, the waiting period timer 106 is initiated. In accordance therewith, the waiting period Tw is started. At a timing at which the waiting period timer 106 has expired, the waiting period Tw comes to an end. In the case that the waiting period Tw is not zero, the waiting period Tw takes a value within a range of roughly 100 to 5000 [ms], for example, 1000 [ms]. In the case that the waiting period Tw is zero, the waiting period Tw is not provided.

The operation mode of the generation unit 128 is set in advance to the first generation mode by the setting unit 130. The generation unit 128 in the first generation mode does not respond to changes in the sensor signal in the waiting period Tw. Further, in the case that the input information SI is input to the input circuit 108 during the waiting period Tw, the sleep state in the second sleep mode is not cancelled. Therefore, the wake-up signal is not input from the input circuit 108 to the electrical power source of the computation unit 100. Stated otherwise, the sleep period SL of the second sleep mode continues.

Accordingly, the generation unit 128 does not respond to changes in the sensor signal during the waiting period Tw, and does not respond to changes in the input information SI accompanying those changes. As a result, the communication unit 120, which has transmitted the data DT to the base wireless device 10 prior to the waiting period Tw, does not transmit new data DT until the waiting period Tw has elapsed. The input information SI during the waiting period Tw is discarded without the generation and the transmission of the data DT being used.

The generation unit 128, on the basis of the input information SI after the waiting period Tw has elapsed, newly generates the data DT. After the waiting period Tw has elapsed, the communication unit 120 transmits the newly generated data DT to the base wireless device 10.

Similar to the example shown in FIG. 6A, in the example shown in FIG. 6B, the period from the aforementioned time C11 until time C21 when the sensor signal of the sensor 50 changes from HI to LO is short. However, the second sleep mode of the computation unit 100 continues until the waiting period Tw that was started at time C12 comes to an end at time C31.

Even if the sensor signal changes during the waiting period Tw, the input information SI is discarded, and the wake-up signal is not input to the electrical power source of the computation unit 100. Accordingly, during the waiting period Tw between time C11 and time C31, the sleep state in the second sleep mode is not cancelled at time C21.

Thereafter, at time C31, the waiting period timer 106 expires, and the waiting period Tw comes to an end. The expiration of the waiting period timer 106 is treated as a trigger, and the wake-up signal is input from the waiting period timer 106 to the electrical power source of the computation unit 100. In accordance therewith, at time C31, the sleep state in the second sleep mode is cancelled. The internal voltage V, which has been decreasing, rises during the sleep period SL from time C12 to time C31. In the example shown in FIG. 6B, since the sleep period SL from time C12 is longer in comparison with the example shown in FIG. 6A, during such a sleep period SL, the internal voltage V is restored to the voltage value Vf.

At time C31 after the waiting period Tw has elapsed, the generation unit 128 reads the state of the sensor signal of the sensor 50 as of time C31, i.e., whether the sensor signal is HI or LO. The generation unit 128, based on the state of the sensor signal that has been read, and the previous input information SI that is stored in the storage unit 102, determines whether or not there has been a change in the state of the sensor signal. In the case that there has been a change in the state of the sensor signal, the generation unit 128 acquires the input information SI based on the state of the sensor signal that was read at time C31, and generates the data DT based on the acquired input information SI.

Moreover, in the case it is determined that there has not been a change in the state of the sensor signal, the generation unit 128 does not generate the data DT. In that case, the sleep process is executed again. However, the waiting period Tw is not started. Moreover, the sleep process that is executed in this instance is the sleep process in the first sleep mode.

In the example shown in FIG. 6B, the sensor signal at time C31 is LO. The sensor signal at time C11, which is indicated by the previous input information SI that is stored in the storage unit 102, is HI. Accordingly, the generation unit 128 determines that a change in the state of the sensor signal has occurred. The generation unit 128 generates the data DT based on the input information SI that was acquired at time C31. The communication unit 120 transmits to the base wireless device 10 the data DT that is generated by the generation unit 128.

In the example shown in FIG. 6B, due to the generation and the transmission of this data DT, although the internal voltage V decreases from the voltage value Vf, unlike the example shown in FIG. 6A, the internal voltage V does not reach the aforementioned voltage value Vs. By providing the waiting period Tw, the restoration of the internal voltage V of the remote wireless device 20 can be expected. Accordingly, any risk of the internal voltage V reaching the voltage value Vs can be suppressed.

In the example shown in FIG. 6B, the data DT is transmitted based on the input information SI at time C31, and the transmission of the data DT at time C32 is successful. Therefore, together with the sleep period SL being started again, the waiting period Tw is also started again. At the starting time of the waiting period Tw, the sleep process in the second sleep mode is executed. The waiting period Tw comes to an end at a subsequent time C33 thereafter.

During the waiting period Tw from time C32 to time C33, it is assumed that a change in the sensor signal has not occurred. After the waiting period Tw comes to an end at time C33, the wake-up signal is input from the waiting period timer 106 to the electrical power source of the computation unit 100. In accordance therewith, at time C33, the sleep state in the second sleep mode is cancelled. The internal voltage V, which has been decreasing, rises during the sleep period SL from time C32 to time C33, and is restored to the voltage value Vf.

At time C33 after the waiting period Tw has elapsed, the generation unit 128 reads the state of the sensor signal of the sensor 50 as of time C33. In the example shown in FIG. 6B, the sensor signal at time C33 is LO. The sensor signal at time C31, which is indicated by the previous input information SI that is stored in the storage unit 102, is LO. Accordingly, the generation unit 128 determines that a change in the state of the sensor signal has not occurred. The generation unit 128 does not acquire the input information SI based on the state of the sensor signal that was read, and therefore, does not generate the data DT. As a result, the communication unit 120 does not carry out the transmission of the data DT.

At a subsequent time C34 thereafter, the sleep period SL is started again. Moreover, in the case that the data DT is not transmitted, the waiting period Tw is not started. Further, the sleep process that is executed in this instance is the sleep process in the first sleep mode. Further, at a subsequent time C41 thereafter, due to the sensor signal of the sensor 50 being changed from LO to HI, the next input information SI is input to the input circuit 108. Since the time C41 is not included within the waiting period Tw, the wake-up signal is input from the input circuit 108 to the electrical power source of the computation unit 100, and the sleep state of the first sleep mode is cancelled. Accordingly, the sleep period SL, which was started at time C34, comes to an end at time C41.

The generation unit 128 generates the new data DT based on the input information SI at time C41. The communication unit 120 transmits to the base wireless device 10 the data DT that is generated by the generation unit 128. After the transmission of the data DT has been successful, the waiting period Tw begins at time C42. Together therewith, the sleep period SL in which the operation mode of the computation unit 100 is set to the second sleep mode also starts.

Moreover, in the second sleep mode, the operation of the computation unit 100 is suspended. However, since it is only necessary that the data DT not be transmitted during the waiting period Tw, the operation of the computation unit 100 need not necessarily be suspended.

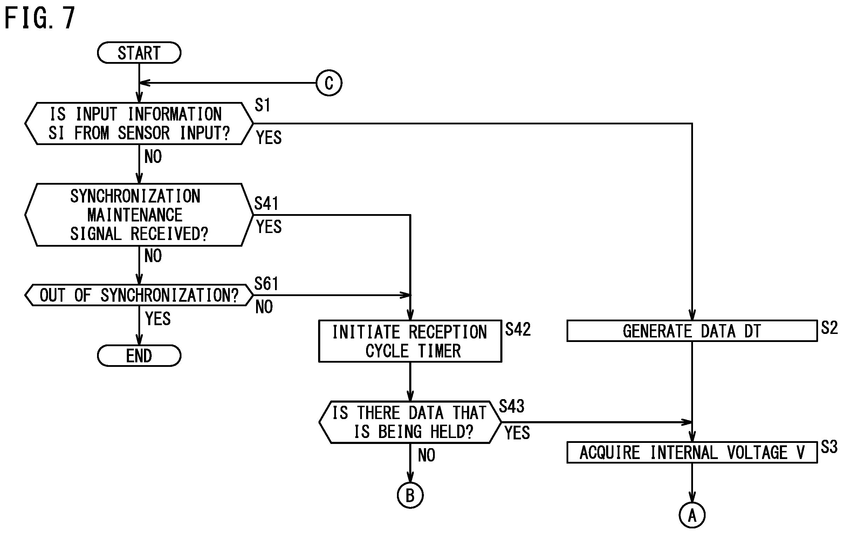

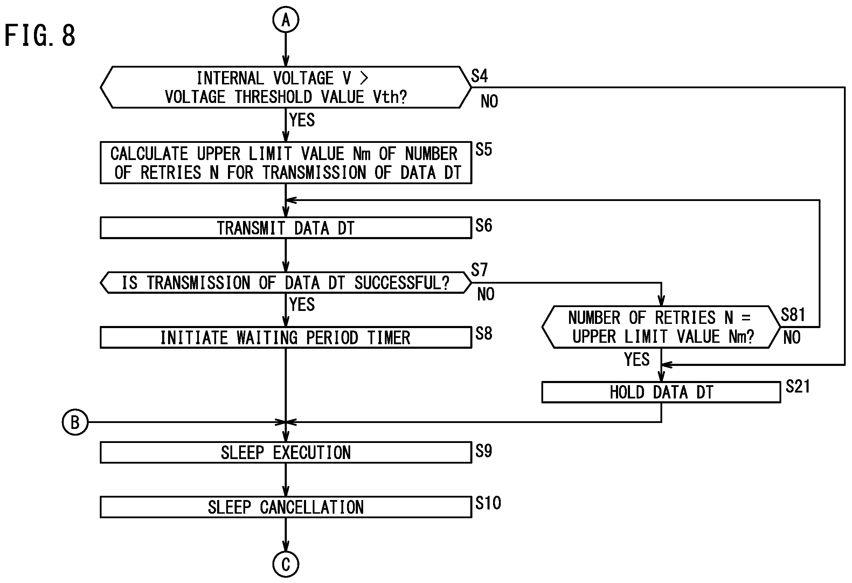

FIG. 7 and FIG. 8 are flowcharts illustrating a transmission processing procedure of the data DT in the remote wireless device 20. The present processing procedure is carried out, for example, by the computation unit 100 of the remote wireless device 20. When the present processing procedure is started, the sleep process is executed, and thereafter, the sleep mode is cancelled based on a sleep cancellation trigger, which will be described later. In the case that the sleep state is cancelled, in step S1, the generation unit 128 determines whether or not the input information SI has been input from the sensor 50 to the input circuit 108 of the remote wireless device 20.

There are three sleep cancellation triggers prior to the process of step S1. The first sleep cancellation trigger is the expiration of the reception cycle timer 104 of the synchronization maintenance signal SM.

A second sleep cancellation trigger is the expiration of the waiting period timer 106. In accordance therewith, the waiting period Tw comes to an end. In the case that the sleep cancellation trigger is the expiration of the waiting period timer 106, the generation unit 128 reads the state of the sensor signal, and determines whether or not there has been a change in the state of the sensor signal. In the case it is determined that there has been a change in the state of the sensor signal, the generation unit 128 acquires the input information SI based on the state of the sensor signal that was read. In that case, in step S1, the generation unit 128 determines that the input information SI from the sensor 50 has been input to the input circuit 108.

The third sleep cancellation trigger occurs in the case that the input information SI from the sensor 50 is input to the input circuit 108 in a state in which the waiting period timer 106 is not started. In that case, in step S1, the generation unit 128 determines that the input information SI from the sensor 50 has been input to the input circuit 108.

In order to facilitate explanation, the aforementioned first and second sleep modes of the computation unit 100 are not distinguished from each other, and in this instance, they are simply referred to as a sleep mode. In greater detail, the sleep mode that is cancelled by the first sleep cancellation trigger is either the first sleep mode or the second sleep mode. The sleep mode that is cancelled by the second sleep cancellation trigger is the second sleep mode. The sleep mode that is cancelled by the third sleep cancellation trigger is the first sleep mode.

In the case that the sleep state is cancelled in response to the second sleep cancellation trigger or the third sleep cancellation trigger, the determination in step S1 is YES. In the case that the sleep state is cancelled in response to the first sleep cancellation trigger, the determination in step S1 is NO. In the case that the determination has become YES in step S1, the present processing procedure proceeds to step S2. In the case that the determination has become NO in step S1, the present processing procedure proceeds to step S41.

In step S2, the generation unit 128, based on the input information SI from the sensor 50, generates the data DT. In step S3, the acquisition unit 124 acquires an internal voltage V within the remote wireless device 20. In step S4, the determination unit 132 determines whether or not the internal voltage V that was acquired in step S3 is greater than the voltage threshold value Vth. In the case that the determination has become YES in step S4, the present processing procedure proceeds to step S5. In the case that the determination has become NO in step S4, then in step S21, the communication unit 120 holds the data DT, and stores the data DT in the storage unit 102. When the process of step S21 is completed, the process proceeds to step S9.

In step S5, the calculation unit 134, in the case that the transmission of the data DT by the communication unit 120 has failed, calculates an upper limit value Nm of the number of retries N that the transmission of the data DT is capable of being retried. In step S6, the communication unit 120 transmits to the base wireless device 10 via the communication module 114 the data DT that was generated in step S2.

In step S7, the communication unit 120 determines whether or not the transmission of the data DT has been successful. In the case that the determination has become YES in step S7, the present processing procedure proceeds to step S8. In the case that the determination has become NO in step S7, the present processing procedure proceeds to step S81. In step S81, the communication unit 120, in accordance with the determination of a transmission failure in step S7, determines whether or not the number of retries N of the transmission of the data DT has reached the upper limit value Nm.

In the case that the determination has become YES in step S81, the present processing procedure proceeds to the aforementioned step S21. In the case that the determination has become NO in step S81, the present processing procedure returns to step S6, and retrying of the transmission of the data DT is carried out. In that case, the retrying of the transmission of the data DT is carried out continuously until the transmission of the data DT is successful.

In step S8, the communication unit 120 initiates the waiting period timer 106. Thus, the waiting period Tw is started.

In step S9, by the electrical power source of the computation unit 100 being turned OFF, the sleep process thereof is executed. The operation mode of the computation unit 100 is set to the sleep mode. When the wake-up signal is input to the electrical power source of the computation unit 100, in step S10, by the electrical power source of the computation unit 100 being turned ON, the sleep state is cancelled. In accordance with the process of step S10, when the operation mode of the computation unit 100 returns to the normal mode, the present processing procedure returns to step S1.

As noted previously, in step S1, in the case that the sleep state is cancelled in response to the first sleep cancellation trigger, the determination is NO. In that case, the present processing procedure proceeds to step S41. In step S41, the communication unit 120 determines whether or not the synchronization maintenance signal SM has been received. In the case that the determination has become YES in step S41, the present processing procedure proceeds to step S42. In the case that the determination has become NO in step S41, the present processing procedure proceeds to step S61. Moreover, in the case that the first sleep cancellation trigger is the reception of the synchronization maintain signal SM, without carrying out the process of step S41, the process of step S42 may be carried out.

In step S42, the communication unit 120 initiates the reception cycle timer 104. In accordance therewith, the reception cycle Tr is started. In step S43, the communication unit 120 refers to the storage unit 102, and determines whether or not there is data DT therein that is being held. In the case that the determination has become YES in step S43, the present processing procedure proceeds to the aforementioned step S3. In the case that the determination has become NO in step S43, the present processing procedure proceeds to the aforementioned step S9.

In step S61, the communication unit 120 determines whether or not the wireless communication between the base wireless device 10 and the remote wireless device 20 has become out of synchronization. In the case that the determination has become YES in step S61, the present processing procedure comes to an end. In the case that the determination has become NO in step S61, the present processing procedure proceeds to the aforementioned step S42.

[Exemplary Modifications]

The above-described embodiment may be modified in the following manner.

(Exemplary Modification 1)

In the above-described embodiment, in the case that the waiting period timer 106 is provided, during the sleep period SL, the internal voltage V is restored to the voltage value Vf. However, in the case that the waiting period Tw is short, there is a possibility that the internal voltage V will not be restored to the voltage value Vf during the sleep period SL. Accordingly, it is preferable that the waiting period Tw be cable of being changed. According to the present exemplary modification, the waiting period Tw is capable of being changed.

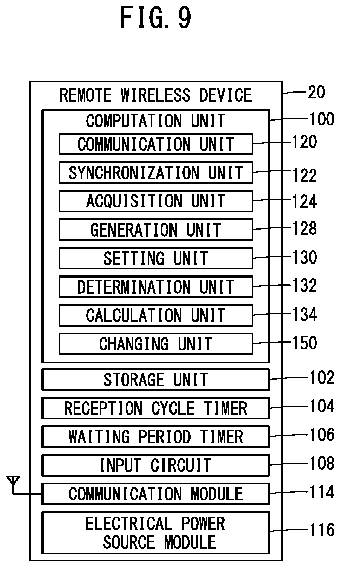

FIG. 9 is a block diagram illustrating an exemplary configuration of the remote wireless device 20. As shown in FIG. 9, the computation unit 100 of the remote wireless device 20, in addition to the respective functional units shown in FIG. 1, further comprises a changing unit 150. The changing unit 150 changes the waiting period Tw, in accordance with a change in the internal voltage V within the remote wireless device 20 during the waiting period Tw. In the case that the internal voltage V at an ending point in time of the waiting period Tw is less than or equal to a predetermined voltage, which will be described later, the changing unit 150 may change the waiting period Tw in accordance with the predetermined voltage.

Moreover, the waiting period Tw is capable of being changed within the aforementioned range of roughly 100 to 5000 [ms]. In the case that the waiting period Tw is set to zero, even if the transmission of the data DT is successful, the waiting period timer 106 will not be started. In that case, the waiting period Tw is not provided after the data DT has been transmitted.

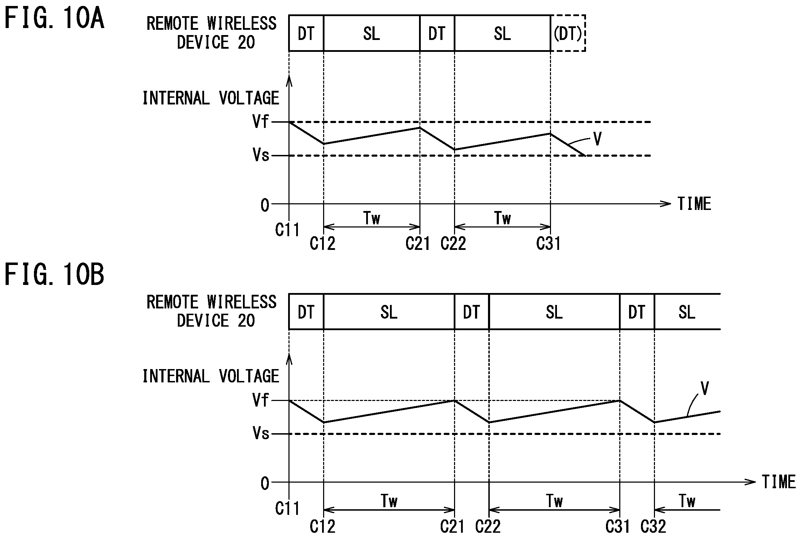

FIG. 10A and FIG. 10B are diagrams illustrating a change in the internal voltage V within the remote wireless device 20, in the case that the waiting period Tw is provided. In FIG. 10A and FIG. 10B, the times for which the same reference numerals (for example, C21) are used need not necessarily represent the same timing. Further, in FIG. 10A and FIG. 10B, in FIG. 6A and FIG. 6B, in FIG. 4A and FIG. 4B, and in FIG. 3A and FIG. 3B, even at times at which the same reference numerals are used, the reference numerals need not necessarily represent the same timing.

FIG. 10A illustrates a change in the internal voltage V within the remote wireless device 20, in the case that the waiting period Tw is short. As shown in FIG. 10A, the internal voltage V at time C11 is at the voltage value Vf. At time C11, in response to a change in the sensor signal of the sensor 50, the generation unit 128 generates the data DT to be transmitted to the base wireless device 10. The communication unit 120 transmits to the base wireless device 10 the data DT that is generated by the generation unit 128. By the generation and the transmission of the data DT, the internal voltage V decreases from the voltage value Vf at time C11.

At time C12, the transmission of the data DT is successful, and a sleep process in the first sleep mode is executed. At this timing, the waiting period timer 106 starts, and the waiting period Tw begins. The internal voltage V at time C12 decreases to a voltage value that is lower than the voltage value Vf. By the sleep process in the first sleep mode being executed at time C12, the internal voltage V, which has been decreasing, rises during the sleep period SL from time C12.

As noted previously, since the waiting period Tw is short, the sleep period SL from time C12 to time C21 is also short. Therefore, until the waiting period Tw comes to an end, and further, until the sleep state is cancelled at time C21, the internal voltage V is not restored to the voltage value Vf, and remains at a voltage value that is lower than the voltage value Vf. At time C21, it is assumed that the generation and the transmission of the data DT is carried out. In that case, the internal voltage V starts to decrease again from time C21.

The internal voltage V at time C22 when the data DT has been successfully transmitted is even lower than the internal voltage V at time C12. At time C22, the transmission of the data DT is successful, and together with the sleep process in the first sleep mode being executed, the waiting period Tw is started. By the sleep process in the first sleep mode being executed, the internal voltage V, which has been decreasing, rises during the sleep period SL from time C22. At time C31 when the short waiting period Tw comes to an end and the sleep state is cancelled, the internal voltage V is not restored to the voltage value Vf, and is even lower than the internal voltage V at time C21.

At time C31, it is assumed that the generation and the transmission of the data DT is started. The internal voltage V decreases again, and reaches a voltage value Vs at which the system outage of the remote wireless device 20 may occur. At time C31, the generation and the transmission of the data DT is not completed. However, in the present exemplary modification, since the waiting period Tw is capable of being changed in the manner described above, the waiting period Tw can be made longer. The change to lengthen the waiting period Tw is carried out by the changing unit 150.

FIG. 10B illustrates a change in the internal voltage V within the remote wireless device 20, in the case that the waiting period Tw is long. As shown in FIG. 10B, the internal voltage V at time C11 is at the voltage value Vf. At time C11, in response to a change in the sensor signal of the sensor 50, the generation and the transmission of the data DT is carried out. In accordance therewith, the internal voltage V decreases from the voltage value Vf at time C11.

At time C12, the transmission of the data DT is successful, and together with the sleep process being executed, the waiting period Tw is started. The internal voltage V, which has been decreasing, rises during the sleep period SL from time C12. Since the waiting period Tw is long, the sleep period SL from time C12 to time C21 is also long. Therefore, until the waiting period Tw comes to an end, and further, until the sleep state is cancelled at time C21, the internal voltage V can be restored to the voltage value Vf.

At time C21, it is assumed that the generation and the transmission of the data DT is carried out. In that case, the internal voltage V at time C22 when the data DT is successfully transmitted again decreases to be lower than the voltage value Vf. However, in the sleep period SL which is started together with the waiting period Tw at time C22, the internal voltage V rises. Until the waiting period Tw comes to an end, and further, until the sleep state is cancelled at time C31, the internal voltage V is restored to the voltage value Vf.

Accordingly, in the case that the generation and the transmission of the data DT is started at time C31, unlike the example shown in FIG. 10A, as shown in FIG. 10B, the generation and the transmission of the data DT can be completed. In the example shown in FIG. 10B, at time C32 when the data DT is successfully transmitted, the waiting period Tw and the sleep period SL are started again, and the internal voltage V rises. More specifically, even if the internal voltage V repeatedly decreases and rises in this manner, the internal voltage V does not reach the voltage value Vs. Therefore, the restoration of the internal voltage V of the remote wireless device 20 can be expected.

Moreover, in the case that the internal voltage V is restored to the voltage value Vf sufficiently earlier than the completion of the waiting period Tw, the waiting period Tw may be made shorter. The change to shorten the waiting period Tw is carried out by the changing unit 150.

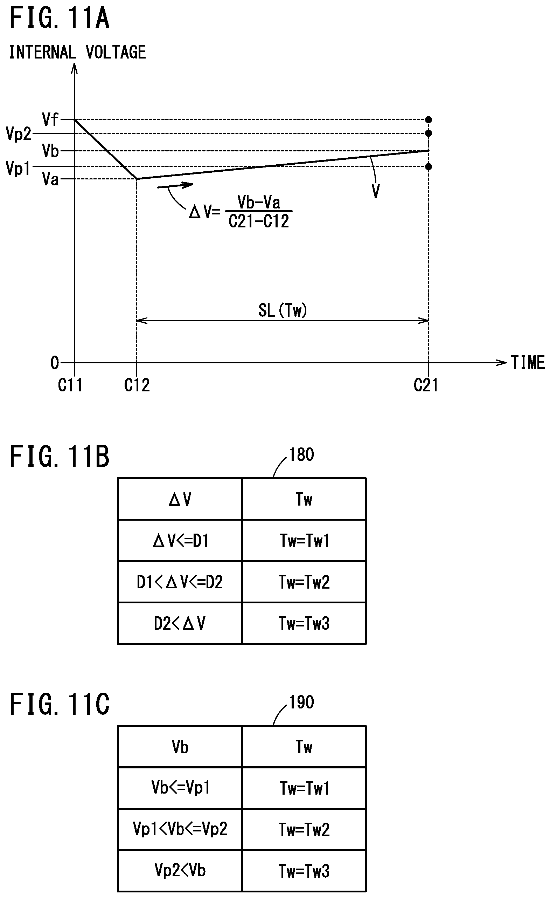

The changing unit 150 changes the waiting period Tw, in accordance with a change in the internal voltage V during the waiting period Tw. FIG. 11A is a diagram illustrating an example of a parameter that is used to change the waiting period Tw. The parameter that is used to change the waiting period Tw, for example, is a rate of change $\Delta V$ of the internal voltage V during the sleep period SL. The changing unit 150 calculates the rate of change $\Delta V$, based on the voltage values of the internal voltage V at a starting point in time and an ending point in time of the waiting period Tw. The starting point in time of the waiting period Tw is a timing immediately prior to the start of the waiting period Tw. The ending point in time of the waiting period Tw is a timing immediately after the end of the waiting period Tw.

In FIG. 11A, from within the change in the internal voltage V shown in FIG. 10A, a change in the internal voltage V from time C11 to time C21 is illustrated. At time C11 shown in FIG. 11A, the generation and the transmission of the data DT by the remote wireless device 20 is carried out. During the period from such a time C11 until time C12 when the transmission of the data DT has been successful, the internal voltage V decreases from the voltage value Vf at time C11.

At time C12, the internal voltage V is at a voltage value Va. The acquisition unit 124 acquires the voltage value Va of the internal voltage V at time C12. Moreover, in the case that a rate of decrease of the internal voltage V per unit period during the transmission of the data DT is specified in advance, the acquisition unit 124 may acquire the voltage value Va at time C12 by calculating the same.

The internal voltage V rises at the starting point in time and the ending point in time of the sleep period SL (the waiting period Tw) from time C12 to time C21. At time C21 when the sleep state is cancelled, the internal voltage V is at a voltage value Vb. The acquisition unit 124 acquires the voltage value Vb of the internal voltage V at time C21. The changing unit 150, based on the voltage values Va and Vb acquired by the acquisition unit 124, calculates the rate of change ΔV which represents the change in the internal voltage V during the sleep period SL shown in FIG. 11A. The rate of change ΔV of the internal voltage V is expressed by Equation (1).

$$\Delta V = (Vb - Va)/(C21 - C12) \qquad ...(1)$$

The changing unit 150 changes the waiting period Tw according to the rate of change ΔV that is calculated. As the rate of change ΔV becomes smaller, the changing unit 150 changes the waiting period Tw to be longer. As the rate of change ΔV becomes larger, the changing unit 150 changes the waiting period Tw to be shorter. The changing unit 150 may change the waiting period Tw, by using a table 180 illustrated in FIG. 11B, and the rate of change ΔV that is calculated.

FIG. 11B is a diagram illustrating the table 180 that is used for changing the waiting period Tw. The table 180 is stored in the storage unit 102. In the table 180, there is stored the value of the waiting period Tw which is changed depending on the rate of change ΔV of the internal voltage V.

As shown in FIG. 11B, in the case that the rate of change ΔV is less than or equal to a first rate of change threshold value D1, the changing unit 150 carries out a change in the waiting period Tw to a set value Tw1. In the case that the rate of change ΔV is greater than the first rate of change threshold value D1, and further, is less than or equal to a second rate of change threshold value D2, the changing unit 150 changes the waiting period Tw to a set value Tw2. The set value Tw1 is greater than the set value Tw2. In the case that the rate of change ΔV is greater than the second rate of change threshold value D2, the changing unit 150 carries out a change in the waiting period Tw to a set value Tw3. The set values Tw1 and Tw2 are greater than the set value Tw3.

The first rate of change threshold value D1, the second rate of change threshold value D2, and the set values Tw1, Tw2, and Tw3 are all determined in advance, in a manner so that the internal voltage V does not reach the voltage value Vs. By changing the waiting period Tw using the table 180, the restoration of the internal voltage V of the remote wireless device 20 can be expected.

As a parameter that is used to change the waiting period Tw, only the internal voltage V at the ending point in time of the waiting period Tw may be used. The ending point in time of the waiting period Tw is a timing immediately after the end of the waiting period Tw. In the example shown in FIG. 11A, the voltage value Vb of the internal voltage V at time C21 when the sleep period SL (the waiting period Tw) comes to an end corresponds to the internal voltage V at a timing immediately after the end of the waiting period Tw. The voltage value Vb is acquired by the acquisition unit 124. The changing unit 150 changes the waiting period Tw in accordance with only the acquired voltage value Vb.

As shown in FIG. 11A, the voltage value Vb of the internal voltage V is less than or equal to the voltage value Vf of the internal voltage V at time C11. Hereinafter, the voltage value Vf of the internal voltage V at time C11 may also be referred to as a predetermined voltage Vf. However, other predetermined voltages in proximity to the voltage value Vf may be used.

As the difference between the voltage value Vb of the internal voltage V and the predetermined voltage Vf becomes greater, the changing unit 150 changes the waiting period Tw to be longer. As the difference between the voltage value Vb of the internal voltage V and the predetermined voltage Vf is smaller, the changing unit 150 changes the waiting period Tw to be shorter. The changing unit 150 may change the waiting period Tw using a table 190 illustrated in FIG. 11C, and the voltage value Vb that is acquired.

FIG. 11C is a diagram illustrating the table 190 that is used for changing the waiting period Tw. The table 190 is stored in the storage unit 102. In the table 190, there are stored the values of the waiting period Tw, which are changed depending on the voltage value Vb of the internal voltage V at the ending point in time of the waiting period Tw. A first voltage threshold value Vp1 shown in FIG. 11C is less than the aforementioned predetermined voltage Vf. A second voltage threshold value Vp2 is greater than the first voltage threshold value Vp1 and less than the predetermined voltage Vf.

As shown in FIG. 11A, the difference between the voltage value Vb and the predetermined voltage Vf is larger in the case that the voltage value Vb is smaller than the first voltage threshold value Vp1 than in the case that the voltage value Vb is larger than the first voltage threshold value Vp1. The difference between the voltage value Vb and the predetermined voltage Vf is smaller in the case that the voltage value Vb is larger than the second voltage threshold value Vp2 than in the case that the voltage value Vb is smaller than the second voltage threshold value Vp2.

As shown in FIG. 11C, in the case that the voltage value Vb is less than or equal to the first voltage threshold value Vp1, the changing unit 150 carries out a change in the waiting period Tw to the set value Tw1. In the case that the voltage value Vb is greater than the first voltage threshold value Vp1, and further, is less than or equal to the second voltage threshold value Vp2, the changing unit 150 carries out a change in the waiting period Tw to the set value Tw2. The set value Tw1 is greater than the set value Tw2.

In the case that the voltage value Vb is greater than the second voltage threshold value Vp2, the changing unit 150 carries out a change in the waiting period Tw to the set value Tw3. The set values Tw1 and Tw2 are greater than the set value Tw3. More specifically, as the difference between the voltage value Vb and the predetermined voltage Vf becomes larger, the longer the waiting period Tw becomes, and as the difference between the voltage value Vb and the predetermined voltage Vf become smaller, the shorter the waiting period Tw becomes.

The first voltage threshold value Vp1, the second voltage threshold value Vp2, and the set values Tw1, Tw2, and Tw3 are all determined in advance, in a manner so that the internal voltage V does not reach the voltage value Vs. By changing the waiting period Tw using the table 190, the restoration of the internal voltage V of the remote wireless device 20 can be expected.

As a parameter that is used to change the waiting period Tw, only the internal voltage V at the starting point in time of the waiting period Tw may be used. The starting point in time of the waiting period Tw is a timing immediately prior to the waiting period Tw. In the example shown in FIG. 11A, the voltage value Va of the internal voltage V at time C12 corresponds to the internal voltage V at the starting point in time of the waiting period Tw. The voltage value Va is acquired by the acquisition unit 124. The changing unit 150 changes the waiting period Tw in accordance with only the acquired voltage value Va.

As the difference between the voltage value Va of the internal voltage V and the predetermined voltage Vf becomes greater, the changing unit 150 changes the waiting period Tw to be longer. As the difference between the voltage value Va of the internal voltage V and the predetermined voltage Vf becomes smaller, the changing unit 150 changes the waiting period Tw to be shorter. The same processing is carried out as in the case that only the voltage value Vb of the internal voltage V is used as the parameter that is used for changing the waiting period Tw, and therefore, a detailed description of this feature will be omitted.

Moreover, the rate of decrease of the internal voltage V during the transmission of the data DT changes depending on the generated electrical power output of the low output electrical power source 40. As noted previously, the rate of decrease may be specified in advance. For example, in the case that the rate of decrease is large, it can be predicted that the internal voltage V during the transmission of the data DT will reach the voltage value Vs at which the system outage may occur. Therefore, the waiting period Tw may be changed by further taking into consideration the rate of decrease of the internal voltage V during the transmission of the data DT. In the case that the rate of decrease is large, the waiting period Tw is made longer. Conversely, in the case that the rate of decrease is small, the waiting period Tw is made shorter.

(Exemplary Modification 2)

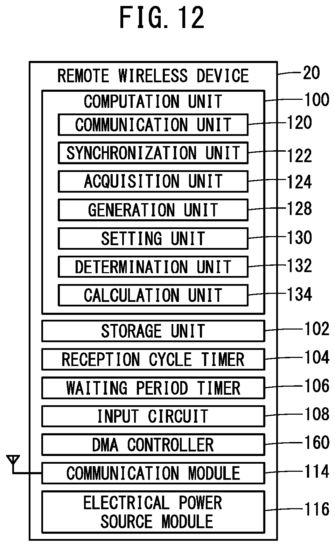

In the above-described embodiment, in the case that the sensor signal is generated with great frequency, as was described with reference to FIG. 6B, the data DT may be transmitted after the waiting period Tw has elapsed. However, there may be cases in which the sensor signal occurs with greater frequency than was assumed at the design stage of the waiting period Tw. In that case, it is not possible to transmit the data DT in response to all of the changes in the sensor signal during the waiting period Tw. In the remote wireless device 20 according to the present exemplary modification, the data DT is transmitted to the base wireless device 10 in response to a change in the sensor signal during the waiting period Tw. A detailed description of the present exemplary modification will be given with reference to FIG. 12 to FIG. 14.

FIG. 12 is a block diagram illustrating an exemplary configuration of the remote wireless device 20. In comparison with the remote wireless devices 20 shown in FIG. 1, the remote wireless device 20 shown in FIG. 12 differs in that a DMA (Direct Memory Access) controller 160 is added thereto. Further, the setting unit 130 carries out in advance with respect to the DMA controller 160 a setting to either permit or prohibit the transfer of information by the DMA controller 160. Hereinafter, the setting that permits the transfer of information by the DMA controller 160 will be referred to as a DMA permission setting. The setting that prohibits the transfer of information by the DMA controller 160 will be referred to as a DMA prohibition setting.

In the case that the DMA permission setting is set in the DMA controller 160, the DMA controller 160 transfers to the storage unit 102 the input information SI that is input from the sensor 50 to the input circuit 108, and stores the input information SI therein. The transfer and the storage of the input information SI in the storage unit 102 by the DMA controller 160 is carried out even in the case that the operation of the computation unit 100 is suspended in the second sleep mode, which will be described later. In the case that the DMA prohibition setting is set in the DMA controller 160, the transfer and the storage of the input information SI in the storage unit 102 is carried out by the computation unit 100.

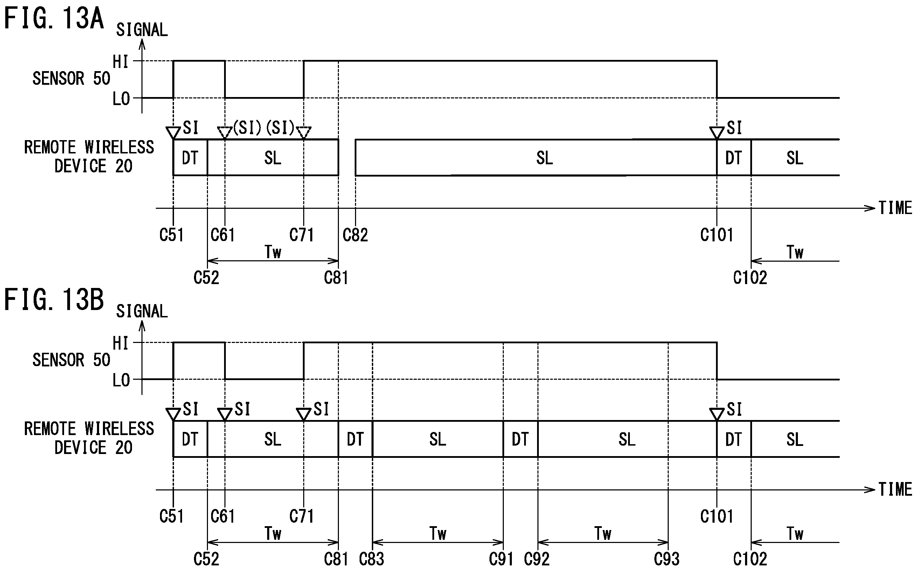

Moreover, the operation mode of the generation unit 128 is set in advance to the second generation mode by the setting unit 130. A description will be given later concerning the second generation mode. Prior to describing the transmission process of the data DT according to the present exemplary modification, by way of comparison, the transmission process of the data DT according to the above-described embodiment will be described with reference to FIG. 13A.

FIG. 13A is a diagram illustrating the transmission process of the data DT, in the case that the operation mode of the generation unit 128 of the remote wireless device 20 is the first generation mode. In the example shown in FIG. 13A, at time C51, the sensor signal of the sensor 50 changes from LO to HI. In response to such a change in the sensor signal, the input information SI is input from the sensor 50 to the input circuit 108. The input information SI is stored in the storage unit 102 by the generation unit 128.

Based on the input information SI corresponding to the sensor signal at time C51, the data DT is generated, and is transmitted to the base wireless device 10. At time C52 after the transmission of the data DT, the waiting period Tw is started by initiating the waiting period timer 106, and also the sleep period SL in which the computation unit 100 enters into the second sleep mode is started. Moreover, after the data DT has been transmitted, until the next instance of the data DT is transmitted, the input information SI that is stored in the storage unit 102 is maintained as the previous input information SI.

At time C61 after time C52, the sensor signal of the sensor 50 changes from HI to LO. Furthermore, thereafter at time C71, the sensor signal of the sensor 50 changes from LO to HI. The time C61 and the time C71 are included within the waiting period Tw. In the case that the operation mode of the generation unit 128 is set to the first generation mode, as noted previously, the generation unit 128 does not respond to changes in the sensor signal during the waiting period Tw. Therefore, the input information SI during the waiting period Tw is discarded without being stored in the storage unit 102. The sleep period SL from time C52 also continues at time C61 and at time C71.

At time C81, which is later than time C71, by the waiting period timer 106 expiring, together with the waiting period Tw coming to an end, the sleep period SL, which began from time C52, comes to an end. The waiting period Tw is the same period as the sleep period SL from time C52 to time C81.

In the example shown in FIG. 13A, the present sensor signal at time C81, which is after the waiting period Tw has elapsed, is HI. The generation unit 128, based on the state of the sensor signal that has been read at time C81, and the previous input information SI at time C51 that is maintained in the storage unit 102, determines that there has not been a change in the state of the sensor signal. In that case, the generation unit 128 does not carry out the generation of the data DT based on the state of the sensor signal that was read. As a result, the communication unit 120 does not carry out the transmission of the data DT. Thereafter, at time C82, the sleep period SL in which the computation unit 100 enters into the first sleep mode is started. The waiting period Tw is not started.

At time C101, due to the sensor signal of the sensor 50 changing from HI to LO, the next input information SI from the sensor 50 is input to the remote wireless device 20. Since the time C101 is not included within the waiting period Tw, the wake-up signal from a peripheral circuit of the computation unit 100 is input to the electrical power source of the computation unit 100, and the sleep state of the first sleep mode is cancelled. Accordingly, the sleep period SL, which was started at time C82, comes to an end.

Based on the input information SI from the sensor 50 corresponding to the sensor signal at time C101, the data DT is generated, and is transmitted to the base wireless device 10. At time C102 after the data DT has been successfully transmitted, the waiting period Tw is started, and the sleep period SL in which the computation unit 100 enters into the second sleep mode is started.

In the example shown in FIG. 13A, the data DT indicating that the sensor signal is HI at time C51 is transmitted to the base wireless device 10. Thereafter, the transmission of new data DT is not carried out, until the data DT indicating that the sensor signal is LO at time C101 is transmitted to the base wireless device 10. As noted previously, the control device, by carrying out the data processing using the data DT that is acquired from the base wireless device 10, detects a change in the sensor signal.

As shown in FIG. 13A, the control device is incapable of detecting that the sensor signal has changed to LO at time C61, and thereafter, that the sensor signal has changed to HI again at time C71. In the case that it is not necessary for the control device to respond to all of the sensor signals that have occurred with great frequency, the transmission process of the data DT shown in FIG. 13A may be used. However, depending on the manner in which the sensor signal is used, it may be important for the control device to count the number of times that the sensor signal changes. Thus, an example of a transmission process for transmitting the data DT according to the present exemplary modification in response to a change in the sensor signal within the waiting period Tw will be described hereinafter with reference to FIG. 13B.

FIG. 13B is a diagram illustrating the transmission process of the data DT, in the case that the operation mode of the generation unit 128 of the remote wireless device 20 is the second generation mode. In FIG. 13A and FIG. 13B, the times for which the same reference numerals (for example, C51) are used represent the same timing.

The operation mode of the generation unit 128 is set in advance to the second generation mode by the setting unit 130. In that case, the generation unit 128 responds to changes in the sensor signal during the waiting period Tw, and to the input of the input information SI accompanying those changes. More specifically, the generation unit 128, based on the input information SI corresponding to the change in the sensor signal during the waiting period Tw, newly generates the data DT after the waiting period Tw has elapsed.

17

In the case that the generation unit 128 is set to the second generation mode, both during the waiting period Tw and during periods apart therefrom, the DMA permission setting is set in the DMA controller 160. In that case, the generation unit 128 which is set to the second generation mode, unlike the first generation mode described above, is capable of generating the data DT based on the input information SI within the waiting period Tw.

Specifically, since the DMA permission setting is set in the DMA controller 160, the input information SI during the waiting period Tw is transferred to the storage unit 102 by the DMA controller 160, and is stored therein. The generation unit 128, after the waiting period Tw has elapsed, on the basis of the input information SI that is stored in the storage unit 102, generates the data DT.

In the example shown in FIG. 13B, similar to the example shown in FIG. 13A, the input information SI, which indicates that the sensor signal of the sensor 50 has changed from LO to HI at time C51, is input to the input circuit 108. The input information SI is transferred to the storage unit 102 by the DMA controller 160, which has been set in advance to the DMA permission setting, and is stored therein. The data DT is generated based on that input information SI, and is transmitted. At time C52, the waiting period Tw is started, and the sleep period SL in which the computation unit 100 enters into the second sleep mode is started. The electrical power source of the computation unit 100 is turned OFF.

At time C61 after time C52 at which the waiting period Tw has started, the sensor signal of the sensor 50 changes from HI to LO. The operation mode of the generation unit 128 is set to the second generation mode. The input information SI that is input to the input circuit 108 from the sensor 50 in response to a change in the sensor signal during the waiting period Tw is transferred to the storage unit 102 by the DMA controller 160, and is stored therein. Since the electrical power source of the computation unit 100 is OFF, the data DT is not transmitted within the waiting period Tw.

At a subsequent time C71 thereafter, the sensor signal of the sensor 50 changes from LO to HI. The input information SI that is input to the input circuit 108 from the sensor 50 in response to a change in the sensor signal is transferred to the storage unit 102 by the DMA controller 160, and is stored therein. Since the data DT is not transmitted during the waiting period Tw, the internal voltage V within the remote wireless device 20 may rise.

At time C81, which is later than time C71, the waiting period Tw comes to an end, and together therewith, the sleep period SL, which began from time C52, comes to an end. The waiting period Tw is the same period as the sleep period SL from time C52 to time C81.

The generation unit 128, based on a plurality of instances of the input information SI that are stored in the storage unit 102 within the waiting period Tw, sequentially generates a plurality of the data DT anew after the waiting period Tw has elapsed. Specifically, at time C81, the generation unit 128 acquires from the storage unit 102 the input information SI at time C61, and newly generates the data DT on the basis of such input information SI. The communication unit 120 transmits to the base wireless device 10 the data DT that is generated by the generation unit 128.

At time C83, the waiting period Tw is started, and the sleep period SL in which the computation unit 100 enters into the second sleep mode is started. At time C91, which is later than time C83, the waiting period Tw comes to an end, and together therewith, the sleep period SL, which began from time C83, comes to an end. The waiting period Tw is the same period as the sleep period SL from time C83 to time C91. At time C91, the generation unit 128 acquires from the storage unit 102 the input information SI at time C71, and newly generates the data DT on the basis of such input information SI. The communication unit 120 transmits to the base wireless device 10 the data DT that is generated by the generation unit 128.

In this manner, the communication unit 120 transmits the plurality of instances of the data DT sequentially in the order in which the input information SI was input, until the transmission of the plurality of instances of the data DT based on the plurality of instances of the input information SI that are stored in the storage unit 102 within the waiting period Tw is completed. Specifically, the communication unit 120 repeats the process of transmitting one instance from among the plurality of data DT, and then transmitting a next instance of the data DT after the waiting period Tw has elapsed. In accordance therewith, time series changes in the input information SI can be represented by the transmission order of the data DT. Accordingly, the above-described control device, in accordance with the transmission order of the plurality of the data DT, is capable of detecting time series changes in the sensor signal.

At time C92, the waiting period Tw is started, and the sleep period SL in which the computation unit 100 enters into the second sleep mode is started. Since all of the transmission of the data DT based on the input information SI within the waiting period Tw has been completed, even after the waiting period Tw comes to an end at time C93, the sleep period SL continues.

More specifically, in the case that there is not any input information SI that is stored in the storage unit 102, even after the waiting period Tw comes to an end, the wake-up signal from the peripheral circuit of the computation unit 100 is not input to the electrical power source of the computation unit 100. However, since the waiting period Tw has come to an end at time C93, the operation mode of the computation unit 100 switches from the second sleep mode to the first sleep mode.

Thereafter, at time C101, the sensor signal of the sensor 50 changes from HI to LO, and the sleep period SL that started at time C92 comes to an end. Based on the input information SI corresponding to this change, the data DT is generated and is transmitted to the base wireless device 10. At time C102 after the transmission of the data DT, the waiting period Tw is started, and the sleep period SL in which the computation unit 100 enters into the second sleep mode is started.

Moreover, at time C81, the generation unit 128, together with the input information SI at time C61, may generate the data DT based on the input information SI at time C71. In that case, the communication unit 120 may transmit one instance of the data DT that is generated based on the input information SI at time C61 and at time C71. More specifically, the input information SI at a plurality of times included within the waiting period Tw may be included in the one instance of the data DT. Further, the number of times that the input information SI is input within the waiting period Tw may be included in the one instance of the data DT.

In any case, one instance of the data DT is transmitted from time C81 until time C83. The period from time C83 to time C91 becomes the waiting period Tw. The data DT is not transmitted between time C91 and time C92. Therefore, the waiting period Tw also is not started. The sleep period SL from time C83 continues beyond the time C91. However, since the waiting period Tw has come to an end at time C91, the operation mode of the computation unit 100 switches from the second sleep mode to the first sleep mode.

In the present exemplary modification, depending on the manner in which the sensor signal is used, the operation mode of the generation unit 128 is set to either the first generation mode or the second generation mode. In the case that the operation mode of the generation unit 128 is set to the first generation mode, the remote wireless device 20 carries out the transmission process of the data DT that is shown in FIG. 13A. In that case, the new data DT is generated based on the input information SI after the waiting period Tw has elapsed, and the new data DT is transmitted. Accordingly, the sleep period SL can be lengthened, and the internal voltage V of the remote wireless device 20 can be expected to be restored quickly.

In the case that the operation mode of the generation unit 128 is set to the second generation mode, the remote wireless device 20 carries out the transmission process of the data DT that is shown in FIG. 13B. In that state, in the case that the input information SI is input within the waiting period Tw, based on the input information SI within the waiting period Tw, the data DT is newly generated, and is transmitted after the waiting period Tw has elapsed. Accordingly, the control device is capable of detecting both a change in the sensor signal during the waiting period Tw, and a change in the sensor signal outside of the waiting period Tw.

More specifically, according to the present exemplary modification, depending on the manner in which the input information SI based on the sensor signal is used, it can be expected that the internal voltage V of the remote wireless device 20 will be restored. Moreover, in the example shown in FIG. 13B, the computation unit 100 in the first and second sleep modes, rather than suspending the operation thereof, may be operated with less power than in the normal mode. In that case, if the electrical power consumption due to the generation of the data DT is small, the generation unit 128 may generate within the waiting period Tw the data DT corresponding to the input of the sensor signal within the waiting period Tw. The data DT that is generated within the waiting period Tw is transmitted by the communication unit 120 after the waiting period Tw has elapsed.

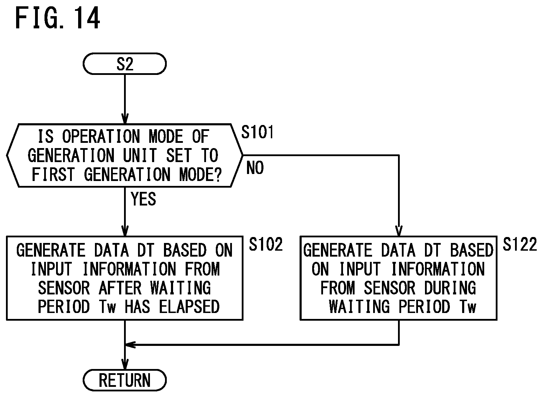

The transmission processing procedure of the data DT in the remote wireless device 20 according to the present exemplary modification is shown in a form that differs in part from the flowchart shown in the aforementioned FIG. 7. Specifically, the process of generating the data DT in step S2 of FIG. 7 is replaced by the process shown in FIG. 14.

FIG. 14 is a flowchart illustrating a data generation processing procedure of the data DT in the remote wireless device 20. When the transmission processing procedure of the data DT shown in FIG. 7 and FIG. 8 proceeds to step S2 in FIG. 7, the process of step S101 of the present processing procedure is carried out. In step S101, the generation unit 128 determines whether or not the operation mode of the generation unit 128 is set to the first generation mode.

In the case that the determination has become YES in step S101, the operation mode of the generation unit 128 is set to the first generation mode, and the present processing procedure proceeds to step S102. In the case that the determination has become NO in step S101, the operation mode of the generation unit 128 is set to the second generation mode, and the present processing procedure proceeds to step S122.

In step S102, the operation mode of the generation unit 128 is the first generation mode. In that case, the input information SI from the sensor 50 during the waiting period Tw is discarded. The generation unit 128, on the basis of the input information SI after the waiting period Tw has elapsed, newly generates the data DT.

In step S122, the operation mode of the generation unit 128 is the second generation mode. Since the DMA permission setting is set in the DMA controller 160, the input information SI from the sensor 50 during the waiting period Tw is stored. The generation unit 128, on the basis of the input information SI within the waiting period Tw, newly generates the data DT. In the case that the process of step S102 is completed, as well as in the case that the process of step S122 is completed, the processing procedure comes to an end, and the process returns to the transmission processing procedure of the data DT shown in FIG. 7 and FIG. 8. More specifically, the process following step S2 in FIG. 7 is carried out.

(Exemplary Modification 3)

The above-described exemplary modifications 1 and 2 may be appropriately combined within a range that does not result in any contradictions.

Concerning the above-described disclosure, the following supplementary notes are further disclosed.

(Supplementary Note 1)

In the remote wireless device (20) configured to carry out wireless communication with the base wireless device (10), the remote wireless device includes the generation unit (128) configured to generate the data (DT) to be transmitted to the base wireless device based on the input information (SI) from the external device (50), and the communication unit (120) configured to transmit the data generated by the generation unit to the base wireless device, wherein, in the case that the communication unit transmits the data to the base wireless device, the data will not be transmitted again until the waiting period (Tw) has elapsed from the transmission of the data. In accordance with such a configuration, it can be expected that the internal voltage of the remote wireless device will be restored.

(Supplementary Note 2)

In the remote wireless device according to Supplementary Note 1, the generation unit, based on the input information after the waiting period has elapsed, may newly generate the data, and the communication unit, after the waiting period has elapsed, may transmit the data that is newly generated to the base wireless device. In accordance with such a configuration, it can be expected that the internal voltage of the remote wireless device will be restored.

(Supplementary Note 3)

In the remote wireless device according to Supplementary Note 1, the generation unit, based on the input information during the waiting period, may newly generate the data after the waiting period has elapsed, and the communication unit, after the waiting period has elapsed, may transmit the data that is newly generated to the base wireless device. In accordance with such a configuration, the change in the sensor signal during the waiting period, and the change in the sensor signal outside of the waiting period, in either of such cases, it is possible to detect the change.

(Supplementary Note 4)

In the remote wireless device according to Supplementary Note 3, in the case that there are a plurality of inputs of the input information within the waiting period, the communication unit may transmit a plurality of the data in the order in which the input information was input, until the transmission of the plurality of the data based on the plurality of the input information is completed. In accordance with such a configuration, time series changes in the input information can be represented in the transmission order of the data.

(Supplementary Note 5)

In the remote wireless device according to Supplementary Note 1, there may further be provided the setting unit (130) configured to set the operation mode of the generation unit to the first generation mode in which the generation unit is not responsive to the change in the input information during the waiting period, or alternatively, the second generation mode in which the generation unit is responsive to the change in the input information during the waiting period, wherein, in the case that the operation mode is set to the first generation mode, the generation unit may newly generate the data based on the input information after the waiting period has elapsed, and in the case that the change is made in the input information during the waiting period in a state in which the operation mode is set to the second operation mode, the generation unit may newly generate the data based on the input information during the waiting period. In accordance with such a configuration, depending on the manner in which the input information is used, it can be expected that the internal voltage of the remote wireless device will be restored.

(Supplementary Note 6)

In the remote wireless device according to Supplementary Note 5, in the case that the operation mode of the generation unit is set to the first generation mode, the input information during the waiting period may be discarded, and in the case that the operation mode of the generation unit is set to the second generation mode, the input information during the waiting period may be stored in the storage unit (102). In accordance with such a configuration, depending on the manner in which the input information is used, it can be expected that the internal voltage of the remote wireless device will be restored.

(Supplementary Note 7)

In the remote wireless device according to Supplementary Note 1, there may further be provided the acquisition unit (124) configured to acquire the internal voltage (V) within the remote wireless device, and the changing unit (150) configured to change the waiting period in response to the change in the internal voltage during the waiting period. In accordance with such a configuration, it can be expected that the internal voltage of the remote wireless device will be restored.

(Supplementary Note 8)

In the remote wireless device according to Supplementary Note 1, there may further be provided the acquisition unit configured to acquire the internal voltage within the remote wireless device, and the changing unit configured to make the waiting period longer as the difference between the internal voltage and the predetermined voltage (Vf) at the starting point in time or the ending point in time of the waiting period increases. In accordance with such a configuration, it can be expected that the internal voltage of the remote wireless device will be restored.

(Supplementary Note 9)

In the remote wireless device according to any one of Supplementary Notes 1 to 6, there may further be provided the acquisition unit configured to acquire the internal voltage within the remote wireless device, and the determination unit (132) configured to determine whether or not the internal voltage is greater than the voltage threshold value (Vth), wherein, in the case that the internal voltage is greater than the voltage threshold value, the communication unit may transmit the data to the base wireless device, and in the case that the internal voltage is less than or equal to the voltage threshold value, the communication unit may hold the data without transmitting the data to the base wireless device. In accordance with such a configuration, it can be expected that the internal voltage of the remote wireless device will be restored.

(Supplementary Note 10)

In the remote wireless device according to Supplementary Note 9, the communication unit may be configured to receive at the reception cycle (Tr) the synchronization maintenance signal (SM) that is transmitted in a cyclical manner from the base wireless device, in a manner so as to maintain the synchronization of the wireless communication in which the synchronization has been established, during the reception capable period in which the synchronization maintenance signal can be received within the reception cycle after the data has been held, the determination unit may determine whether or not the internal voltage is less than or equal to the voltage threshold value, in the case that the internal voltage is greater than the voltage threshold value, the communication unit may transmit the data that was held to the base wireless device after having received the synchronization maintenance signal, and in the case that the internal voltage is less than or equal to the voltage threshold value, the communication unit may continue to hold the data that was held. In accordance with such a configuration, even in an unstable communication environment, the possibility of the data transmission being successful is increased.

(Supplementary Note 11)

In the remote wireless device according to Supplementary Note 9, there may further be provided the calculation unit (134) configured to calculate, in the case that the internal voltage is greater than the voltage threshold value, based on the internal voltage and the voltage threshold value, the upper limit value (Nm) of the number of retries (N) that the transmission of the data is capable of being retried in the case that the transmission of the data by the communication unit to the base wireless device has failed, wherein, in the case that the transmission of the data has failed, the communication unit may retry transmitting the data to the base wireless device within the range in which the number of retries is less than or equal to the upper limit value, until the transmission of the data is successful, and in the case that the number of retries is reached and the transmission of the data is still unsuccessful, the communication unit may hold the data without transmitting the data to the base wireless device. In accordance with such a configuration, even in an unstable communication environment, the possibility of the data transmission being successful is increased.

(Supplementary Note 12)

In the remote wireless device according to Supplementary Note 11, the communication unit may be configured to receive at the reception cycle the synchronization maintenance signal that is transmitted in a cyclical manner from the base wireless device, in a manner so as to maintain the synchronization of the wireless communication in which the synchronization has been established, during the reception capable period in which the synchronization maintenance signal can be received within the reception cycle after the data has been held, the determination unit may determine whether or not the internal voltage is less than or equal to the voltage threshold value, wherein, in the case that the internal voltage is greater than the voltage threshold value, the communication unit may transmit the data that was held to the base wireless device after having received the synchronization maintenance signal, and in the case that the internal voltage is less than or equal to the voltage threshold value, the communication unit may continue to hold the data that was held. In accordance with such a configuration, even in an unstable communication environment, the possibility of the data transmission being successful is increased.

(Supplementary Note 13)

In the remote wireless transmission device according to Supplementary Note 12, in the reception cycle after the data has been held, in the case that the internal voltage is greater than the voltage threshold value, the computation unit, based on the internal voltage and the voltage threshold value, may newly calculate the upper limit value of the number of retries, in the case that the transmission of the data has failed in the reception cycle after the data has been held, the communication unit, until the transmission of the data is successful, may retry transmitting the data that was held, within a range in which the number of retries is less than or equal to the upper limit value, and in the case that the number of retries is reached and the transmission of the data is still unsuccessful, the communication unit may continue to hold the data. In accordance with such a configuration, even in an unstable communication environment, the possibility of the data transmission being successful is increased.

Moreover, it should be noted that the present invention is not limited to the disclosure described above, and various alternative or additional configurations can be adopted therein without departing from the essence and gist of the present invention.

**Claims**

1. A remote wireless device (20) configured to carry out wireless communication with a base wireless device (10), the remote wireless device comprising:

   a generation unit (128) configured to generate data (DT) to be transmitted to the base wireless device based on input information (SI) from an external device (50); and
   a communication unit (120) configured to transmit the data generated by the generation unit to the base wireless device;
   wherein, in a case that the communication unit transmits the data to the base wireless device, the data will not be transmitted again until a waiting period (Tw) has elapsed from transmission of the data.

2. The remote wireless device according to claim 1, wherein the generation unit, based on the input information after the waiting period has elapsed, newly generates the data, and
   the communication unit, after the waiting period has elapsed, transmits the data that is newly generated to the base wireless device.

3. The remote wireless device according to claim 1, wherein the generation unit, based on the input information during the waiting period, newly generates the data after the waiting period has elapsed, and
   the communication unit, after the waiting period has elapsed, transmits the data that is newly generated to the base wireless device.

4. The remote wireless device according to claim 3, wherein, in a case that there are a plurality of inputs of the input information within the waiting period, the communication unit transmits a plurality of the data in an order in which the input information was input, until the transmission of the plurality of the data based on the plurality of the input information is completed.

5. The remote wireless device according to claim 1, further comprising a setting unit (130) configured to set an operation mode of the generation unit to a first generation mode in which the generation unit is not responsive to a change in the input information during the waiting period, or alternatively, a second generation mode in which the generation unit is responsive to the change in the input information during the waiting period,

   wherein, in a case that the operation mode is set to the first generation mode, the generation unit newly generates the data based on the input information after the waiting period has elapsed, and
   in a case that the change is made in the input information during the waiting period in a state in which the operation mode is set to the second operation mode, the generation unit newly generates the data based on the input information during the waiting period.

6. The remote wireless device according to claim 5, wherein in the case that the operation mode of the generation unit is set to the first generation mode, the input information during the waiting period is discarded, and
in the case that the operation mode of the generation unit is set to the second generation mode, the input information during the waiting period is stored in a storage unit (102).

7. The remote wireless device according to claim 1, further comprising:

an acquisition unit (124) configured to acquire an internal voltage (V) within the remote wireless device; and
a changing unit (150) configured to change the waiting period in response to a change in the internal voltage during the waiting period.

8. The remote wireless device according to claim 1, further comprising:

an acquisition unit configured to acquire an internal voltage within the remote wireless device; and
a changing unit configured to make the waiting period longer as a difference between the internal voltage and a predetermined voltage (Vf) at a starting point in time or an ending point in time of the waiting period increases.

9. The remote wireless device according to any one of claims 1 to 6, further comprising:

an acquisition unit configured to acquire an internal voltage within the remote wireless device; and
a determination unit (132) configured to determine whether or not the internal voltage is greater than a voltage threshold value (Vth),
wherein, in a case that the internal voltage is greater than the voltage threshold value, the communication unit transmits the data to the base wireless device; and
in a case that the internal voltage is less than or equal to the voltage threshold value, the communication unit holds the data without transmitting the data to the base wireless device.

10. The remote wireless device according to claim 9, wherein:

the communication unit is configured to receive at a reception cycle (Tr) a synchronization maintenance signal (SM) that is transmitted in a cyclical manner from the base wireless device, in a manner so as to maintain synchronization of the wireless communication in which the synchronization has been established;
during a reception capable period in which the synchronization maintenance signal can be received within the reception cycle after the data has been held, the determination unit determines whether or not the internal voltage is less than or equal to the voltage threshold value;
in the case that the internal voltage is greater than the voltage threshold value, the communication unit transmits the data that was held to the base wireless device after having received the synchronization maintenance signal; and
in the case that the internal voltage is less than or equal to the voltage threshold value, the communication unit continues to hold the data that was held.

11. The remote wireless device according to claim 9, further comprising a calculation unit (134) configured to calculate, in the case that the internal voltage is greater than the voltage threshold value, based on the internal voltage and the voltage threshold value, an upper limit value (Nm) of number of retries (N) that the transmission of the data is capable of being retried in a case that the transmission of the data by the communication unit to the base wireless device has failed,

wherein, in the case that the transmission of the data has failed, the communication unit retries transmitting the data to the base wireless device within a range in which the number of retries is less than or equal to the upper limit value, until the transmission of the data is successful; and
in a case that the number of retries is reached and the transmission of the data is still unsuccessful, the communication unit holds the data without transmitting the data to the base wireless device.

12. The remote wireless device according to claim 11, wherein the communication unit is configured to receive at a reception cycle a synchronization maintenance signal that is transmitted in a cyclical manner from the base wireless device, in a manner so as to maintain synchronization of the wireless communication in which the synchronization has been established,

during a reception capable period in which the synchronization maintenance signal can be received within the reception cycle after the data has been held, the determination unit determines whether or not the internal voltage is less than or equal to the voltage threshold value,

in the case that the internal voltage is greater than the voltage threshold value, the communication unit transmits the data that was held to the base wireless device after having received the synchronization maintenance signal, and

in the case that the internal voltage is less than or equal to the voltage threshold value, the communication unit continues to hold the data that was held.

13. The remote wireless transmission device according to claim 12, wherein:

in the reception cycle after the data has been held, in the case that the internal voltage is greater than the voltage threshold value, the computation unit, based on the internal voltage and the voltage threshold value, newly calculates the upper limit value of the number of retries;

in a case that the transmission of the data has failed in the reception cycle after the data has been held, the communication unit, until the transmission of the data is successful, retries transmitting the data that was held, within a range in which the number of retries is less than or equal to the upper limit value; and

in the case that the number of retries is reached and the transmission of the data is still unsuccessful, the communication unit continues to hold the data.

EP 4 757 430 A1

FIG. 1

30

10 — BASE WIRELESS DEVICE

80 — COMPUTATION UNIT

82 — STORAGE UNIT

84 — COMMUNICATION MODULE

SENSOR — 50
REMOTE WIRELESS DEVICE — 20

SENSOR — 50
REMOTE WIRELESS DEVICE — 20

SENSOR — 50

REMOTE WIRELESS DEVICE — 20

COMPUTATION UNIT — 100
COMMUNICATION UNIT — 120
SYNCHRONIZATION UNIT — 122
ACQUISITION UNIT — 124
GENERATION UNIT — 128
SETTING UNIT — 130
DETERMINATION UNIT — 132
CALCULATION UNIT — 134

STORAGE UNIT — 102
RECEPTION CYCLE TIMER — 104
WAITING PERIOD TIMER — 106
INPUT CIRCUIT — 108
COMMUNICATION MODULE — 114
ELECTRICAL POWER SOURCE MODULE — 116

40

## FIG. 2

BASE WIRELESS DEVICE 10                                    REMOTE WIRELESS DEVICE 20

SYNCHRONIZATION ESTABLISHMENT SIGNAL SE →

SYNCHRONIZATION ESTABLISHMENT

← DATA DT

SYNCHRONIZATION ESTABLISHMENT CONFIRMATION | CONFIRMATION ACKNOWLEDGEMENT SIGNAL ACK →

SYNCHRONIZATION MAINTENANCE SIGNAL SM →

$Tr$

SYNCHRONIZATION MAINTENANCE SIGNAL SM →

$Tr$

SYNCHRONIZATION MAINTENANCE SIGNAL SM →

⋮

SENSOR SIGNAL INPUT

← DATA DT

CONFIRMATION ACKNOWLEDGEMENT SIGNAL ACK →

EP 4 757 430 A1

FIG. 3A

REMOTE WIRELESS DEVICE 20

FIG. 3B

REMOTE WIRELESS DEVICE 20

EP 4 757 430 A1

FIG. 4A

REMOTE WIRELESS
DEVICE 20

| ▽SI | | ▽SI | | ▽SI |
|---|---|---|---|---|
| DT | SL | DT | SL | (DT) |

INTERNAL VOLTAGE

Vf ┈┈┈┈┈┈┈┈┈┈┈

Vs ┈┈┈┈┈┈┈┈┈┈┈ V

0 ─────────────→ TIME

C11 C12    C21 C22    C31

FIG. 4B

REMOTE WIRELESS
DEVICE 20

| ▽SI | | ▽SI | | ▽SI | | |
|---|---|---|---|---|---|---|
| DT | SL | DT | SL | SL | SM | DT |

INTERNAL VOLTAGE

V

Vf ┈┈┈┈┈┈┈┈┈┈┈┈┈┈┈┈┈ V41  V21
Vth ┈┈┈┈┈┈┈┈┈┈┈┈┈┈┈
                                V31
Vs ┈┈┈┈┈┈┈┈┈┈┈┈┈┈┈┈┈

0 ─────────────────────→ TIME

C11 C12    C21 C22    C31        C40 C41
                       C33

FIG. 5

EP 4 757 430 A1

# FIG. 6A

# FIG. 6B

# FIG. 7

START

C

S1 IS INPUT INFORMATION SI FROM SENSOR INPUT?
— NO
— YES

S41 SYNCHRONIZATION MAINTENANCE SIGNAL RECEIVED?
— NO
— YES

S61 OUT OF SYNCHRONIZATION?
— NO
— YES

END

S42 INITIATE RECEPTION CYCLE TIMER

S2 GENERATE DATA DT

S43 IS THERE DATA THAT IS BEING HELD?
— NO
— YES

S3 ACQUIRE INTERNAL VOLTAGE V

B

A

EP 4 757 430 A1

FIG. 8

(A)

INTERNAL VOLTAGE V >
VOLTAGE THRESHOLD VALUE Vth?   S4
NO

YES

CALCULATE UPPER LIMIT VALUE Nm OF NUMBER   S5
OF RETRIES N FOR TRANSMISSION OF DATA DT

TRANSMIT DATA DT   S6

IS TRANSMISSION OF DATA DT SUCCESSFUL?   S7
NO

YES

INITIATE WAITING PERIOD TIMER   S8

NUMBER OF RETRIES N =   S81
UPPER LIMIT VALUE Nm?   NO

YES

HOLD DATA DT   S21

(B)

SLEEP EXECUTION   S9

SLEEP CANCELLATION   S10

(C)

# FIG. 9

REMOTE WIRELESS DEVICE —20

COMPUTATION UNIT —100

COMMUNICATION UNIT —120

SYNCHRONIZATION UNIT —122

ACQUISITION UNIT —124

GENERATION UNIT —128

SETTING UNIT —130

DETERMINATION UNIT —132

CALCULATION UNIT —134

CHANGING UNIT —150

STORAGE UNIT —102

RECEPTION CYCLE TIMER —104

WAITING PERIOD TIMER —106

INPUT CIRCUIT —108

COMMUNICATION MODULE —114

ELECTRICAL POWER SOURCE MODULE —116

# FIG. 10A

REMOTE WIRELESS DEVICE 20

INTERNAL VOLTAGE

# FIG. 10B

REMOTE WIRELESS DEVICE 20

INTERNAL VOLTAGE

# FIG. 11A

INTERNAL VOLTAGE

$\Delta V = \dfrac{Vb-Va}{C21-C12}$

SL(Tw)

0

C11  C12  C21

TIME

# FIG. 11B

180

| $\Delta V$ | Tw |
|---|---|
| $\Delta V <= D1$ | Tw=Tw1 |
| $D1 < \Delta V <= D2$ | Tw=Tw2 |
| $D2 < \Delta V$ | Tw=Tw3 |

# FIG. 11C

190

| Vb | Tw |
|---|---|
| $Vb <= Vp1$ | Tw=Tw1 |
| $Vp1 < Vb <= Vp2$ | Tw=Tw2 |
| $Vp2 < Vb$ | Tw=Tw3 |

# FIG. 12

REMOTE WIRELESS DEVICE —20

COMPUTATION UNIT —100

COMMUNICATION UNIT —120

SYNCHRONIZATION UNIT —122

ACQUISITION UNIT —124

GENERATION UNIT —128

SETTING UNIT —130

DETERMINATION UNIT —132

CALCULATION UNIT —134

STORAGE UNIT —102

RECEPTION CYCLE TIMER —104

WAITING PERIOD TIMER —106

INPUT CIRCUIT —108

DMA CONTROLLER —160

COMMUNICATION MODULE —114

ELECTRICAL POWER SOURCE MODULE —116

FIG. 13A

FIG. 13B

FIG. 14

S2

IS OPERATION MODE OF GENERATION UNIT SET TO FIRST GENERATION MODE?  S101

NO

YES

GENERATE DATA DT BASED ON INPUT INFORMATION FROM SENSOR AFTER WAITING PERIOD Tw HAS ELAPSED  S102

GENERATE DATA DT BASED ON INPUT INFORMATION FROM SENSOR DURING WAITING PERIOD Tw  S122

RETURN

## INTERNATIONAL SEARCH REPORT

| | International application No. |
|---|---|
| | **PCT/JP2024/018662** |

**A.    CLASSIFICATION OF SUBJECT MATTER**

*H04W 52/02*(2009.01)i; *H04W 4/38*(2018.01)i; *H04W 56/00*(2009.01)i
FI:    H04W52/02 110; H04W52/02 130; H04W56/00 130; H04W4/38

According to International Patent Classification (IPC) or to both national classification and IPC

**B.    FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-190855 A (HITACHI HIGH-TECH SOLUTIONS CORP.) 13 December 2021 (2021-12-13) | 1-6 |
| | paragraphs [0011]-[0016], [0042]-[0046], fig. 10 | |
| Y | | 11-13 |
| X | JP 2016-208274 A (PANASONIC INTELLECTUAL PROPERTY MANAGEMENT CO., LTD.) 08 December 2016 (2016-12-08) | 1-2, 7-10 |
| | paragraphs [0024]-[0090] | |
| Y | | 11-13 |
| Y | JP 2007-184754 A (HITACHI, LTD.) 19 July 2007 (2007-07-19) | 11-13 |
| | paragraphs [0025]-[0037], [0069]-[0076], [0100]-[0103] | |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/018662**

| Patent document cited in search report | | | Publication date (day/month/year) | Patent family member(s) | Publication date (day/month/year) |
|---|---|---|---|---|---|
| JP | 2021-190855 | A | 13 December 2021 | (Family: none) | |
| JP | 2016-208274 | A | 08 December 2016 | (Family: none) | |
| JP | 2007-184754 | A | 19 July 2007 | US 2007/0159321 A1 paragraphs [0055]-[0068], [0100]-[0107], [0132]-[0134] | |

Form PCT/ISA/210 (patent family annex) (July 2022)

**REFERENCES CITED IN THE DESCRIPTION**

**Patent documents cited in the description**

- JP 2021190855 A

- JP 2017188868 A